# EUROPÄISCHE PATENTSCHRIFT

(11) **EP 2 778 541 B1**
(45) Veröffentlichungstag und Bekanntmachung des Hinweises auf die Patenterteilung: **24.08.2016**
(21) Anmeldenummer: 13159617.3
(22) Anmeldetag: 15.03.2013
(51) Int. Cl.: F24D 10/00, F24D 17/00

(54) **Schaltung zur Senkung der primären Rücklauftemperatur in Fernwärmeanlagen**
Circuit for decreasing the primary return temperature in district heating systems
Circuit destiné à faire baisser la température de retour primaire dans des installations de chauffage à distance

(43) Veröffentlichungstag der Anmeldung: 17.09.2014
(73) Patentinhaber: GEWOFAG Gebäude Service GmbH, 81669 München (DE)
(72) Erfinder: Ebster, Wilfried, 6277 Zellberg (AT)
(74) Vertreter: Huebner, Stefan Rolf

(56) Entgegenhaltungen:
- EP-A1- 1 764 564
- EP-A2- 1 403 593
- DE-U1- 29 518 417
- DE-U1-202006 018 246

## Beschreibung

### Gebiet der Erfindung

Die Erfindung betrifft ein Rohrleitungssystem gemäß des Oberbegriffs des Anspruchs 1 sowie ein Verfahren zum Erwärmen von Wärmeträgermedium in einem Wärmerohrsystem eines Rohrleitungssystems gemäß Anspruch 11.

### Hintergrund der Erfindung

Der Fachmann kennt Rohrleitungssysteme, die ein erstes Wärmerohrsystem aufweisen, das Wärme aus dem Fernwärmenetz-Vorlauf bezieht und ein durch Wärmeentnahme abgekühltes Wärmeträgermedium in den Fernwärmenetz-Rücklauf des Fernwärmenetzes rückspeist. Außerdem ist Teil eines solchen Rohrleitungssystems ein zweites Wärmerohrsystem, das über einen Wärmetauscher Wärme aus dem ersten Wärmerohrsystem entnimmt, um damit ein zweites Wärmeträgermedium zu erwärmen. Dadurch kühlt sich das erste Wärmeträgermedium im ersten Wärmerohrsystem ab.

Ein derartiges Rohrleitungssystem ist beispielsweise aus der EP 1 455 140 A1 bekannt. Zudem lehrt diese Schrift eine mehrstufige Warmwasserbereitung. In einem als Vorwärmer ausgebildeten, mit einem ersten Wärmeträgermedium aus einem Primärrücklauf über eine Verbindungsleitung beaufschlagten Wärmeübertrager, wird ein zweites Wärmeträgermedium, in diesem Fall Trinkwasser, in Abhängigkeit von der Temperatur des Primärrücklaufs auf ein entsprechendes Temperaturniveau angehoben. Bei Bedarf kann die Temperatur des zweiten Wärmeträgermediums nach Passieren des Vorwärmers durch einen als Zwischenwärmer dienenden Wärmeübertrager thermisch angehoben werden. Der Zwischenwärmer kann auch als Solaranlage ausgeführt sein. Anschließend hebt ein Nachwärmer die Temperatur des zweiten Wärmeträgermediums auf Solltemperatur für eine Warmwasserzuführung.

Ein anderes Rohrleitungssystem mit einer Vorerwärmung ist in der EP 2 187 135 A2 als Stand der Technik beschrieben. In diesem Rohrleitungssystem wird ein erster Wärmetauscher zum Erwärmen eines Heizungskreislaufs verwendet, während ein zweiter und ein dritter Wärmetauscher kaskadiert zur Trinkwassererwärmung eingesetzt werden. Sie übertragen Wärme aus einem Wärmerohrsystem an ein Trinkwasserrohrsystem. Der erste Wärmetauscher dient einer Zirkulationsnachheizung, der andere zum Vorheizen von Frischwasser, das dem Zirkulationskreislauf zum Ausgleich von Entnahmeverlusten zugeführt wird. Die beiden Wärmetauscher bilden eine zweistufige Kaskade. Solange keine Entnahme aus dem Zirkulationskreislauf erfolgt, wird dessen Temperatur allein unter Verwendung des zweiten Wärmetauschers auf dem vorbestimmten Niveau gehalten. Der primärseitige Rückstrom des zweiten Wärmetauschers wird über den primärseitigen Zulaufanschluss dem dritten Wärmetauscher zugeführt und durchströmt ihn primärseitig. Der erkaltete Rückstrom wird nach Austritt aus dem primärseitigen Rücklaufanschluss in das Fernwärmenetz zurückgespeist.

Die EP 1 403 593 A2 lehrt einen Wärmeträgermedium-Pufferspeicher, der als Wärmeträgermedium-Tank ausgebildet ist. Erste Heizmittel sind in einem unteren Abschnitt des Wärmeträgermedium-Pufferspeichers angeordnet und zweite Heizmittel sind in einem oberen Abschnitt des Wärmeträgermedium-Pufferspeichers angeordnet. Die Heizmittel können beispielsweise durch ein Solarpanel erhitzt werden.

Aus der EP 1 764 564 A1 ist eine Trinkwassererwärmungsanlage mit einem Rohrleitungssystem nach dem Oberbegriff des Anspruchs 1 bekannt. Darin werden zwei Zonen der Wärmeübertragung auf das Trinkwassersystem geschaffen, indem Wasser in einem Wärmeträgermedium-Pufferspeicher in zwei Zonen erhitzt wird.

Aus der DE 295 18 417 U1 ist eine Anlagenkombination von Fernwärmeheizung und legionellenfreier Trinkwassererwärmung bekannt. In einem Wassertank ist ein Nachwärmer vorgesehen.

Die DE 20 2006 018 246 U1 befasst sich mit einem Bauteil zur Absicherung kleiner Warmwassertemperaturschwankungen in Warmwasserbereitungsanlagen mit Durchflusssystem. Das Bauteil soll erreichen, unter allen Lastbedingungen eine Zirkulationstemperatur von 70°C sicherzustellen.

### Der Erfindung zugrundeliegende Aufgabe

Der Erfindung liegt die Aufgabe zugrunde, ein Rohrleitungssystem der oben beschriebenen Art, in der Wärme von einem ersten Wärmerohrsystem auf ein zweites Wärmerohrsystem übertragen wird, zu verbessern. Insbesondere soll die Effizienz der Wärmeentnahme gesteigert werden können, eine höhere Temperaturspreizung des Wärmeträgermediums zwischen Wärmevorlauf und Wärmerücklauf im ersten Wärmerohrsystem erreicht werden können, eine Verringerung der Verkalkung und eine verbesserte Wärmeträgermediumerwärmung für ein zweites Wärmerohrsystem ermöglicht werden. Zu diesem Zweck soll auch ein verbessertes Verfahren zum Erwärmen eines zweiten Wärmeträgermediums im zweiten Wärmerohrsystem bereitgestellt werden, um insbesondere zur Einhaltung der Vorschriften der Wärmelieferanten eine Temperatur des zweiten Wärmeträgermediums vor Rückspeisung in den Fernwärmenetz-Rücklauf von unter 45° C einhalten zu können.

### Erfindungsgemäße Lösung

Die Bezugszeichen in sämtlichen Ansprüchen haben keine einschränkende Wirkung, sondern sollen lediglich deren Lesbarkeit verbessern.

Die der Erfindung zugrunde liegende Aufgabe wird erfindungsgemäß durch ein Rohrleitungssystem nach Anspruch 1 gelöst. Ferner wird sie durch ein Verfahren nach Anspruch 11 gelöst.

Vorteilhafte Aus- und Weiterbildungen, welche einzeln oder in Kombination miteinander eingesetzt werden können, sind Gegenstand der abhängigen Ansprüche.

Ein Wärmerohrsystem im Sinne der Erfindung ist ein Rohrsystem, das verwendet wird, um ein Wärmeträgermedium leiten zu können, so dass abhängig von der Temperatur eines damit in Wärmeübertragungsverbindung stehenden anderen Wärmerohrsystems Wärme zwischen den Wärmerohrsystemen ausgetauscht und entnommen werden kann.

Ein Fernwärmenetz im Sinne der Erfindung ist ein von einem öffentlichen oder privaten Fernwärmeanbieter oder der öffentlichen Hand bereitgestelltes Rohrnetz, das Wärmekraftwerke mit den Wärmerohrsystemen von Verbrauchern verbindet. Ein Fernwärmenetz verfügt für gewöhnlich über einen Fernwärmenetz-Vorlauf mit erhitztem Wärmeträgermedium und einen Fernwärmenetz-Rücklauf mit dem gegenüber abgekühlten Wärmeträgermedium. Der Fernwärmenetz-Vorlauf beginnt in der Regel bei einem Heizkraftwerk oder Heizwerk, während der Fernwärmenetz-Rücklauf auch dort endet. Auf diese Weise wird ein Kreislauf bereitgestellt, in dem von einem Heizkraftwerk ein Wärmeträgermedium erhitzt wird, das Medium über den Fernwärmenetz-Vorlauf an Wärmerohrsysteme der Verbraucher bereitgestellt wird und anschließend das abgekühlte Wärmeträgermedium in den Fernwärmenetz-Rücklauf eingespeist wird, durch den es wieder zum Heizkraftwerk oder Heizwerk gelangt.

Im Sinne der Erfindung ist ein Wärmeträgermedium das Medium, das in dem Fernwärmenetz vorzugsweise mit einer Pumpe transportiert wird. Solch ein Wärmeträgermedium ist häufig heißes Wasser oder Wasserdampf, beispielsweise mit Temperaturen von 90 °C bis zu 180 °C. Im Falle von Wasserdampf als Wärmeträgermedium wird das Kondensat des abgekühlten Wasserdampfes in den Fernwärmenetz-Rücklauf rückgespeist.

Durch das erfindungsgemäße Rohrleitungssystem wird der Vorteil erreicht, dass ein gewisser Anteil Restwärme mit hoher Temperatur, der sonst in den Fernwärmenetz-Rücklauf des Fernwärmenetzes wieder eingespeist wird, zum Vorerwärmen von zweitem Wärmeträgermedium genutzt werden kann. Die Erfinder haben eine Lösung gefunden, mit der entgegen bestehender Vorurteile eine Wärmeträgermedium-Vorerwärmung großer Mengen eines Wärmeträgermediums stattfinden kann. Ein Wärmeträgermedium-Pufferspeicher wird bereitgestellt, um ein Reservoir für das zweite Wärmeträgermedium zu bilden, so dass gegenüber einer einfachen Rohrleitung mehr Volumen zum Zwischenspeichern des zweiten Wärmeträgermediums und somit auch zum Zwischenspeichern von Wärme zur Verfügung steht. So kann noch mehr vom Fernwärmenetz-Vorlauf bereitgestellte Wärme tatsächlich vom Verbraucher über den Primärrücklauf genutzt werden. Insbesondere kann in verbrauchsarmen Zeiten Wärmeenergie gespeichert werden, die in verbrauchsstarken Zeiten abgegeben werden kann. Zudem kann als Folge der Wärmezwischenspeicherung die Spreizung der Fernwärmenetz-Vorlauf- und der Fernwärmenetz-Rücklaufwärme weiter erhöht werden. Das kann wiederum darin resultieren, dass nur noch in verringertem Umfang vor einer erneuten Erhitzung des Wärmeträgermediums in einem Heizkraftwerk ein zusätzliches Abkühlen des Wärmeträgermediums, beispielsweise in Kühltürmen, erfolgen muss. Die Abgabe teurer Wärmeleistung in die Umwelt kann somit reduziert und CO₂ eingespart werden. Die Anzahl von Kühltürmen kann insofern darüber hinaus beim Konzipieren und Konstruieren eines Fernwärmenetzes reduziert werden. Die Erfindung kann also einerseits positiv für den Umweltschutz sein und andererseits zugleich dem Verbraucher und dem Fernwärmeanbieter enorme Kostenvorteile und Leistungssteigerungen im Kraftwerk bringen.

### Ausgestaltung der Erfindung

Bevorzugt ist der Wärmeträgermedium-Pufferspeicher verglichen mit seinem Wärmeträgermediumeinlauf, also einer Öffnung, durch die das zweite Wärmeträgermedium in den Wärmeträgermedium-Pufferspeicher eintritt, abschnittsweise aufgeweitet. Dadurch ist erreichbar, dass der Wärmeträgermedium-Pufferspeicher ein sehr großes Volumen des zweiten Wärmeträgermediums speichern kann. Das wiederum kann den Vorteil mit sich bringen, dass in dem Wärmeträgermedium-Pufferspeicher das zweite Wärmeträgermedium in großer Menge bereitgehalten werden kann, um in Zeiten geringen Wärmebedarfs eine große Menge Wärme aus dem Primärrücklauf des ersten Wärmerohrsystems oder auch einer anderen, zusätzlichen Wärmequelle aufzunehmen und in Zeiten erhöhten Bedarfs diese Wärme bereitstellen zu können. Durch den Wärmeträgermedium-Pufferspeicher kann eventuell also eine zusätzliche Wärmeentnahme aus dem Primärvorlauf nahezu unnötig oder zumindest verringert werden, wenn das zweite Wärmeträgermedium im Wärmeträgermedium-Pufferspeicher, also dem Reservoir, bereits eine ausreichend hohe Temperatur aufweist. Besonders vorzugsweise ist das zweite Wärmerohrsystem so eingerichtet, dass dem Wärmeträgermedium-Pufferspeicher nur dann zweites Wärmeträgermedium entnommen wird, wenn auch dem zweiten Wärmerohrsystem selbst das zweite Wärmeträgermedium entnommen wird. Solange keine Entnahme aus dem zweiten Wärmerohrsystem stattfindet, ruht also das zweite Wärmeträgermedium im Reservoir. Dadurch kann eine besonders gute Wärmeaufnahme und Wärmespeicherung möglich sein. In einer besonders bevorzugten Ausführungsform ist der Wärmeträgermedium-Pufferspeicher im Wesentlichen kreiszylindrisch ausgeführt.

Vorzugsweise ist der Wärmeträgermediumeinlauf des Wärmeträgermedium-Pufferspeichers im Vergleich zu einem Innendurchmesser des Wärmeträgermedium-Pufferspeichers jeweils senkrecht zur Durchströmrichtung des zweiten Wärmeträgermediums sehr viel kleiner. Nochmals bevorzugt ist der Innendurchmesser des Wärmeträgermedium-Pufferspeichers senkrecht zur Durchströmrichtung des zweiten Wärmeträgermediums mindestens 1,5 mal so groß, besonders vorzugsweise jedoch mindestens doppelt so groß, mindestens dreimal so groß, mindestens achtmal so groß, mindestens fünfzehn mal so groß, mindestens zwanzigmal so groß oder auch mindestens fünfzigmal so groß wie der Durchmesser seines Wärmeträgermediumeinlaufs. Dadurch kann im Vergleich mit einem normalen Rohrstück, das keine mindestens abschnittsweise Aufweitung aufweist, ein besonders großes Reservoir für das zweite Wärmeträgermedium bereitgestellt werden. Ganz besonders vorzugsweise ist der Innendurchmesser der Durchmesser eines kreiszylindrischen Wärmeträgermedium-Pufferspeichers. Vorzugsweise ist dies also die Strecke, die geradlinig von einem Punkt der Zylindermantelfläche durch die Mittelachse des Zylinders zu einem gegenüberliegenden Punkt auf der Zylindermantelfläche führt, wobei die Strecke senkrecht zur Mittelachse verläuft. Bevorzugt ist, dass der Wärmeträgermediumeinlauf als Rohranschluss ausgeführt ist.

Ein bevorzugter Wärmeträgermedium-Pufferspeicher ist ein Wärmeträgermedium-Tank. Ist das Wärmeträgermedium Wasser, insbesondere Trinkwasser, so ist der Wärmeträgermedium-Pufferspeicher besonders vorzugsweise ein Wassertank. Derartige Tanks als Reservoirs sind vorzugsweise leicht zu beschaffen, preisgünstig, wartungsarm und in großer Auswahl auf dem Markt vorhanden. Zudem stellen sie vorzugsweise ein großes Speichervolumen bereit, besonders vorzugsweise ein Volumen zum Zwischenspeichern des zweiten Wärmeträgermediums von mehr als 100 Litern, mehr als 200 Litern, mehr als 400 Litern, mehr als 750 Litern oder auch mehr als oder viel mehr als 1000 Litern. Ganz besonders ist für einen Wärmeträgermedium-Tank bei einem Bedarf für das zweite Wärmeträgermedium von 600 Litern pro Tag ein Speichervolumen von 300 Litern bevorzugt. Entsprechend liegt ein besonders bevorzugtes Fassungsvermögen für den Wärmeträgermedium-Tank beim doppelten Tagesbedarf an zweitem Wärmeträgermedium. So kann eine ausreichend große Menge Wärmeträgermedium zwischengespeichert werden, ohne übermäßig Raum für das Reservoir zu beanspruchen. Der Wärmeträgermedium-Tank kann aus Edelstahl gefertigt sein. Er kann zudem oder alternativ thermoglasiert, verzinkt oder kunststoffbeschichtet sein. Vorzugsweise hat er eine zylindrische, besonders bevorzugt eine kreiszylindrische Form. Ganz besonders bevorzugt liegen sich der Wärmeträgermediumeinlauf und ein Wärmeträgermediumablauf des Wärmeträgermedium-Pufferspeichers genau gegenüber. So kann ein besonders günstiger Strömungsverlauf und eine besonders günstige Wärmeabgabe für das zweite Wärmeträgermedium erreicht werden. Ein bevorzugter Wärmeträgermedium-Pufferspeicher hat zudem eine Wärmeisolierung, vorzugsweise auf seiner Außenseite. Besonders bevorzugt ist, dass eine Wärmeisolierung auf die Außenseite als Hartschaum aufgeschäumt ist. Solch eine Wärmeisolierung kann sehr effektiv eine unerwünschte Wärmeabgabe von dem zweiten Wärmeträgermedium im Wrämeträgermedium-Pufferspeicher durch die Wand des Wärmeträgermedium-Pufferspeicher vermindern, so dass vorteilhafterweise keine nennenswerte Wärmemenge als abgestrahlte Wärme verloren geht.

In einer bevorzugten Ausführungsform verläuft der Rohrleitungsabschnitt, der den ersten Wärmetauscher mit dem zweiten Ende des ersten Wärmerohrsystems fluidverbindet, durch den Wärmeträgermedium-Pufferspeicher hindurch, um das zweite Wärmeträgermedium zu erwärmen. So kann es ermöglicht werden, auf komplizierte zusätzliche Schaltungen und/oder Zuleitungen zu verzichten. Der besagte Rohrleitungsabschnitt, auch Primärrücklauf genannt, wird also so geführt, dass der Wärmeträgermedium-Pufferspeicher mit Restwärme direkt, beispielsweise über ein Heizbündel, erhitzt werden kann. Er kann alternativ oder zusätzlich auch schraubenförmig um den Wärmeträgermedium-Pufferspeicher gewickelt sein. Besonders bevorzugt ist jedoch, dass der Primärrücklauf, also der Rohrleitungsabschnitt zwischen erstem Wärmetauscher und zweitem Ende des ersten Wärmerohrsystems, abschnittsweise in den Wärmeträgermedium-Pufferspeicher hineinreicht. Dort verläuft er vorzugsweise in der Art eines Tauchsieders oder eines bekannten Heizbündels spiralförmig. Bevorzugt ist, dass der Primärrücklauf nur an oder in einem gewissen Abschnitt des Wärmeträgermedium-Pufferspeicher angeordnet ist. Besonders bevorzugt ist, dass er nur an oder in 10%, 20%, 30% 40% oder nochmals besonders bevorzugt 50% des Wärmeträgermedium-Pufferspeichers angeordnet ist. Alternativ kann er aber auch außen oder innen entlang an bis zu 100% des Wärmeträgermedium-Pufferspeichers angeordnet sein, bezogen auf die Länge des Wärmeträgermedium-Pufferspeichers. So kann ein besonders großer Abschnitt des Primärrücklaufs Wärme an das zweite Wärmeträgermedium im Wärmeträgermedium-Pufferspeicher übertragen. Schließlich tritt der Primärrücklauf vorzugsweise aus dem Wärmeträgermedium-Pufferspeicher dann mit Ziel zweites Ende des ersten Wärmerohrsystems wieder aus. Besonders bevorzugt ist, dass er benachbart zum Wärmeträgermediumeinlauf aus dem Wärmeträgermedium-Pufferspeicher austritt, während er ungefähr bei vorzugsweise der halben Füllhöhe oder der vollen Füllhöhe des Wärmeträgermedium-Pufferspeichers in den Wärmeträgermedium-Pufferspeicher eintritt, so dass er vorzugsweise entlang 50% der Länge des Pufferspeichers angeordnet ist.

Beim Austreten aus dem ersten Wärmetauscher hat das erste Wärmeträgermedium zwischen erstem Wärmetauscher und Wärmeträgermedium-Pufferspeicher noch eine primäre Restwärme von vorzugsweise ca. 50 °C bis 60°C und in dem Rohrsegment des ersten Wärmerohrsystems, das dem Rohrsegment, das den Wärmeträgermedium-Pufferspeicher erwärmt, in Strömungsrichtung nachgelagert ist, noch eine verbleibende Restwärme von vorzugsweise 35 °C oder weniger. So ist es möglich, das zweite Wärmeträgermedium im Wärmeträgermedium-Pufferspeicher von etwa 10 °C, was im Wesentlichen der Temperatur in einem Wärmeträgermediumnetz des zweiten Wärmeträgermediums entsprechen kann, aus dem das zweite Wärmeträgermedium entnommen wird, und was im Wesentlichen der typischen Temperatur von Trinkkaltwasser entspricht, auf etwa 20 °C bis 40 °C zu erwärmen. Entsprechend muss das zweite Wärmeträgermedium durch den ersten Wärmetauscher anschließend nur noch um etwa 20 bis 40 K erwärmt werden, um eine Zieltemperatur von etwa 60 °C, beispielsweise an einer Entnahmestelle bei Trinkwassererwärmern, zu erreichen. Es muss also durch den ersten Wärmetauscher wesentlich weniger Wärme aus dem Primärvorlauf entnommen werden. Eine energieeffiziente Wärmeentnahme ist somit erreichbar.

Bevorzugt ist, dass der zweite Wärmetauscher sekundärseitig als Wärmeträgermedium-Pufferspeicher ausgeführt ist. So kann auf einfache Weise ein Wärmeübertragungsmittel mit einem Reservoir für das zweite Wärmeträgermedium in einer einzigen Baueinheit bereitgestellt werden, was sich vorteilhaft auf die Erstellungskosten auswirken kann. Alternativ kann aber der Wärmetauscher auch über eine Wärmeverbindung mit einem separaten Wärmeträgermedium-Pufferspeicher verbunden sein. Das kann die Flexibilität und/oder die Betriebssicherheit hinsichtlich der Anordnung erhöhen, indem beispielsweise die Wärme vom zweiten Wärmetauscher über wärmeleitfähige Materialien an ein separates Reservoir weitergeleitet wird. Besonders vorzugsweise ist der zweite Wärmetauscher jedoch sekundärseitig als Wärmeträgermedium-Tank, vorzugsweise mit bereits beschriebener besonderer Wärmeisolierung, ausgeführt, um eine besonders kompakte Bauform zu ermöglichen.

In einer bevorzugten Ausführungsform umfasst das zweite Wärmerohrsystem einen Zirkulationskreislauf. Es ist erwünscht, dass beispielsweise Warmwasser als zweites Wärmeträgermedium bereits in kurzer Zeit nach dem Öffnen einer Wasserentnahmeeinrichtung, beispielsweise eines Wasserhahns, zur Verfügung steht. Dies kann vorteilhafterweise durch einen Zirkulationskreislauf erreicht werden. Vorzugsweise wird in dem Zirkulationskreislauf durch eine Zirkulationspumpe das zweite Wärmeträgermedium in ständigem Fluß durch den ersten Wärmetauscher geleitet, sodass das gesamte im Zirkulationskreislauf vorhandene Wärmeträgermedium eine im Wesentlichen konstant hohe Temperatur aufweist. Sie liegt vorzugsweise bei 55 °C, kann aber unter anderem auch bei 60 °C liegen oder bei 50 °C. Entsprechend liegt die Temperatur für gewöhnlich vorzugsweise in einem Intervall zwischen 50 °C und 60 °C. Auch davon abweichende Temperaturen sind möglich. Der Zirkulationskreislauf wird mit zweitem Wärmeträgermedium aus dem Wärmeträgermedium-Pufferspeicher nachgefüllt, sobald eine Wärmeträgermediumentnahme aus dem Zirkulationskreislauf stattfindet. Dann strömt ebenfalls automatisch zweites Wärmeträgermedium aus dem Netz in den Wärmeträgermedium-Pufferspeicher nach. Alternativ kann das zweite Wärmerohrsystem aber auch ohne einen Zirkulationskreislauf ausgeführt sein. Das kann eine kostengünstige Lösung sein, wenn eine längere Vorlaufzeit hinnehmbar ist, bevor nach dem Öffnen der Wasserentnahmeeinrichtung warmes Wärmeträgermedium zur Verfügung stehen soll. Dann wird das Wärmeträgermedium vorzugsweise über ein einfaches Rohrsegment aus dem Wärmeträgermedium-Pufferspeicher bezogen, das Rohrsegment am ersten Wärmetauscher vorbeigeführt, dabei das Wärmeträgermedium erhitzt und anschließend aus der Wasserentnahmeeinrichtung entnommen, und zwar immer in dem Moment, wenn die Wasserentnahmeeinrichtung zur Wasserentnahme geöffnet wird. Bevorzugt ist, dass das zweite Wärmeträgermedium, wenn es den ersten Wärmetauscher passiert, entgegensetzt zur Strömungsrichtung des ersten Wärmeträgermediums fließt. So kann eine sehr günstige Wärmeübertragung gewährleistet sein. Alternativ können die Strömungsrichtungen aber auch gleichgerichtet sein, beispielsweise, wenn die Netzanschlusssituation es erfordert.

Im Zirkulationskreislauf ist vorzugsweise ein Legionellen-Umschaltventil angeordnet. Dadurch kann einmal täglich ein Erhitzen des Wärmeträgermediums auf bis zu 60 °C oder auch mehr erfolgen, um Legionellen und andere Keime wirksam abtöten zu können. Vorzugsweise ist es in Reihe mit der Zirkulationspumpe geschaltet. Es erlaubt vorzugsweise, die Umlaufzeit des zweiten Wärmeträgermediums durch eine Wegstreckenverkürzung zu verringern, so dass eine höhere Temperatur des zweiten Wärmeträgermediums erreicht werden kann.

Vorzugsweise ist eine Fluidverbindung vorhanden, über die das zweite Wärmeträgermedium erneut in den Wärmeträgermedium-Pufferspeicher eingespeist werden kann, nachdem es bereits durch den ersten Wärmetauscher und den zweiten Wärmetauscher erwärmt worden ist. Bevorzugt ist in dieser Hinsicht, dass das zweite Wärmerohrsystem einen Zirkulationskreislauf umfasst, der mit dem Wärmeträgermedium-Pufferspeicher fluidverbunden ist, um das zweite Wärmeträgermedium aus dem Zirkulationskreislauf in den Wärmeträgermedium-Pufferspeicher einleiten zu können. Die Idee ist also, insbesondere temporär eine zusätzliche Erwärmung des zweiten Wärmeträgermediums innerhalb des Wärmeträgermedium-Pufferspeichers erreichen zu können. Die Fluidverbindung wird aus diesem Grund vorzugsweise über ein Ventil hergestellt. So kann beispielsweise das zweite Wärmeträgermedium aus dem Zirkulationskreislauf in dem oder die Wärmeträgermedium-Pufferspeicher eingeleitet werden, den Wärmeträgermedium-Pufferspeicher durchströmen und anschließend wieder in den Zirkulationskreislauf einströmen. Das Ventil dient also vorzugsweise als ein Legionellen-Umschaltventil, besonders vorzugsweise als ein zweites Legionellen-Umschaltventil, das zusätzlich zu dem ersten Legionellen-Umschaltventil bereitgestellt wird. Eine Zirkulationspumpe kann vorzugsweise bei entsprechender Ventilstellung als Ladepumpe für den Wärmeträgermedium-Pufferspeicher dienen. Alternativ kann eine gesonderte Ladepumpe vorhanden sein. Auf die beschriebene Weise kann eine Legionellen-Abtötung für den oder die Wärmeträgermedium-Pufferspeicher bereitgestellt werden. Dadurch kann der Benutzer vor Legionellen oder anderen Krankheitserregern besser geschützt sein.

Bevorzugt ist, dass das vorangehend beschriebene Einspeisen des bereits durch den ersten und den zweiten Wärmetauscher erwärmten zweiten Wärmeträgermediums über den Wärmeträgermediumeinlauf des Wärmeträgermedium-Pufferspeichers erfolgt, vorzugsweise über das vorangehend beschriebene Ventil. Besonders bevorzugt ist, dass das zweite Legionellen-Umschaltventil den Zirkulationskreislauf mit dem Wärmeträgermediumeinlauf des Wärmeträgermedium-Pufferspeichers verbindet. So kann ein zweites Wärmeträgermedium, beispielsweise 60 °C heißes Wasser, aus dem Zirkulationskreislauf in den Pufferspeicher geleitet, bevorzugt gepumpt, werden, um dort eventuell vorhandene Legionellen oder andere Keime abtöten zu können. Das Wasser fließt danach zurück in den Zirkulationskreislauf. Der Wärmeträgermedium-Pufferspeicher wird in einer Spülstellung des Ventils also Teil des Zirkulationskreislaufs, sofern ein Zirkulationskreislauf vorhanden ist. Empfohlen ist, einmal täglich für 30 Minuten den Wärmeträgermedium-Pufferspeicher mit mindestens 60 °C heißem zweitem Wärmeträgermedium aus dem Zirkulationskreislauf zu spülen. Führt man das zweite Wärmeträgermedium aus dem Zirkulationskreislauf über den Wärmeträgermediumeinlauf dem Wärmeträgemedium-Pufferspeicher zu, kann auf zusätzliche Leitungssegmente oder Anschlussöffnungen verzichtet werden, was sich kostensenkend auf diese Ausführungsform des Rohrleitungssystems auswirken kann. Eine separate Zuleitung zusätzlich zum Wärmeträgermediumeinlauf und zum Wärmeträgermediumablauf ist alternativ auch möglich. Zu beachten ist, dass der Zirkulationskreislauf fakultativ ist und die Beimischung von bereits durch den ersten und den zweiten Wärmetauscher erhitzten zweiten Wärmeträgermedium auch aus einem einfachen Rohrstück erfolgen kann, falls ein Zirkulationskreislauf nicht vorhanden ist. In diesem Fall kann das einfache Rohrstück beispielsweise durch eine Elektrobegleitheizung erwärmt werden, um so eine Erhitzung des zweiten Wärmeträgermediums in diesem Rohrstück zu ermöglichen. Eine bevorzugte Elektrobegleitheizung ist schraubenförmig um das Rohrstück gewickelt, besonders bevorzugt auf einer Länge, die größer ist als die Hälfte der Länge des Rohrstücks.

In einer anderen Ausführungsform ist bevorzugt, dass das zweite Wärmeträgermedium aus dem Zirkulationskreislauf über den Wärmeträgermediumablauf des Wärmeträgermedium-Pufferspeichers dem Wärmeträgermedium-Pufferspeicher zugeführt werden kann, um die entkeimende Wirkung zu erreichen. Vorzugsweise kann ein zweites Legionellenumschaltventil in dem Zirkulationskreislauf für diesen Zweck so gestaltet werden, dass der Wärmeträgermedium-Pufferspeicher temporär derart in den Zirkulationskreislauf eingeschlossen werden kann, dass er entgegen der üblichen Flussrichtung befüllt wird, also von dem Wärmeträgermediumablauf zum Wärmeträgermediumeinlauf hin. Dann ist weiterhin bevorzugt, dass eine Flussverbindung zwischen Zirkulationskreislauf und Wärmeträgermediumeinlauf des Wärmeträgermedium-Pufferspeichers, also an einem Punkt zwischen Wärmeträgermedium-Pufferspeicher und Wärmeträgermediumübergabepunkt des zweiten Wärmeträgermediums, eingerichtet wird, die vorzugsweise durch ein zusätzliches Legionellenschutz-Durchflussventil temporär verschlossen werden kann. So kann das zweite Wärmeträgermedium aus dem Zirkulationskreislauf in den Wärmeträgermedium-Pufferspeicher entgegen der üblichen Flussrichtung rückgespeist und darin aufgestaut werden. Eine besonders preisgünstige und funktionale und deshalb besonders bevorzugte Lösung kann bereitgestellt werden, wenn die Verbindung zwischen Wärmeträgermediumeinlauf des Wärmeträgermedium-Pufferspeichers und des Zirkulationskreislaufs als T-Abzweig im Zirkulationskreislauf realisiert ist. Vorzugsweise ist der T-Abzweig mit einem, bevorzugt dem zweiten, Legionellenumschaltventil versehen. Auf ein Legionellenumschaltventil auf der Fluidverbindung zwischen Wärmeträgermediumablauf und Zirkulationskreislauf und auf das Legionellenschutz-Durchflussventil kann dann verzichtet werden. So kann mit nur einem einzigen Ventil ein Legionellenschutz für den Wärmeträgermedium-Pufferspeicher realisiert werden, das ein Rückführen von zweitem Wärmeträgermedium über den Wärmeträgermediumablauf ermöglicht. Diese voranstehend beschriebenen Schaltungen erlauben ebenfalls eine ausreichende Erwärmung des gesamten zweiten Wärmeträgermediums im Wärmeträgermedium-Pufferspeicher auf über 60 °C, um Keime abzutöten, auch wenn in diesem Fall die Einströmrichtung in den Wärmeträgermedium-Pufferspeicher temporär umgekehrt wird. Ein Rückströmen von zweitem Wärmeträgermedium in das Wärmeträgermediumnetz über den Wärmeträgermediumübergabepunkt hinaus ist nicht zu befürchten, da in diesem Bereich vom Fachmann ein Rückschlagventil vorgesehen ist, das ausschließlich den Fluss von zweitem Wärmeträgermedium in Richtung Entnahmestelle zulässt.

Vorzugsweise ist an dem Wärmeträgermedium-Pufferspeicher ein Wärmeübertragungsmittel angeordnet, um an das zweite Wärmeträgermedium Wärme aus einer Wärmequelle, die zusätzlich zur Wärmeübertragung aus dem ersten wärmeträgermedium Wärme bereitstellt, zu übertragen. Besonders vorzugsweise ist die Wärmequelle eine Solarthermieanlage. Es kann aber auch beispielsweise eine Geothermieanlage, eine Abfallwärmeanlage, ein Verbrennungsofen oder eine elektrische Heizquelle sein. Auf diese Weise kann erreicht werden, dass das zweite Wärmeträgermedium noch weniger Wärme über den ersten Wärmetauscher aus dem Primärvorlauf benötigt, um auf die Zieltemperatur erhitzt zu werden. Eine Solarthermieanlage kann beispielsweise Flachkollektoren für Sonnenstrahlung aufweisen oder auch Vakuumröhrenkollektoren oder auch Parabolrinnenkollektoren oder Solartürme. Beispielsweise kann schon eine Sonnenkollektorfläche zwischen 4 und 6 Quadratmetern ausreichend sein, um einen 600 Liter Wärmeträgermedium-Pufferspeicher hinreichend zu erwärmen, so dass an sonnigen Tagen keinerlei oder zumindest weniger zusätzliche Wärme aus dem ersten Wärmeträgermedium bezogen werden muss. Das zweite Wärmeträgermedium kann beispielsweise in diesem Fall also ausschließlich durch die zusätzliche Wärmequelle ausreichend und kostengünstig erwärmt werden. Alternativ oder zusätzlich zur Erwärmung des zweiten Wärmeträgermediums im Wärmeträgermedium-Pufferspeichers, also im Reservoir, kann beispielsweise auch das erste Wärmeträgermedium im ersten Wärmerohrsystem durch eine zusätzliche Wärmequelle erwärmt werden, um damit mittelbar das zweite Wärmeträgermedium ebenfalls stärker erwärmen zu können. Ist eine derartige zusätzliche Wärmequelle vorhanden, so ist bevorzugt, dass der Wärmeträgermedium-Pufferspeicher ein Fassungsvermögen von vorzugsweise 1000 Litern für das zweite Wärmeträgermedium aufweist. So kann die zusätzliche Wärme besonders vorteilhaft genutzt werden. Beispielsweise kann auch eine Überhitzung des zweiten Wärmeträgermediums unterbleiben.

Besonders bevorzugt ist, dass in einem ersten Abschnitt des Wärmeträgermedium-Pufferspeichers, der auf dem Strömungsweg des zweiten Wärmeträgermediums in Richtung einer Entnahmestelle der Wärmeträgermediumübergabestation näher liegt, eine Wassererwärmung mittels der Restwärme aus dem ersten Wärmerohrsystem erfolgt, während in einem zweiten Abschnitt des Wärmeträgermedium-Pufferspeichers, der auf dem Strömungsweg des zweiten Wärmeträgermediums der Wärmeträgermediumübergabestation für das zweite Wärmeträgermedium im Vergleich zum ersten Abschnitt ferner liegt, eine Erwärmung durch die zusätzliche Wärmequelle, beispielsweise Solarthermie, erfolgt. Vorzugsweise ist der erste Abschnitt auf einem niedrigeren Höhenniveau angesiedelt als der zweite Abschnitt. So kann im ersten Abschnitt eine Erwärmung von einer Ausgangstemperatur von etwa 10 °C auf eine Übergangstemperatur von etwa 40 °C erfolgen und im zweiten Abschnitt eine weitere Erwärmung auf zwischen 40 °C und 60 °C erfolgen. Hinreichend kann aber bereits sein, dass das zweite Wärmeträgermedium erst den Abschnitt des Wärmeträgermedium-Pufferspeichers durchströmt, in dem die Erwärmung mittels Restwärme aus dem ersten Wärmerohrsystem erfolgt und anschließend des Abschnitt des Wärmeträgermedium-Pufferspeichers durchströmt, in dem die Erwärmung mittels Solarthermie erfolgt. Es ist offensichtlich, dass ein bereits so stark vorerwärmtes zweites Wärmeträgermedium kaum noch eine weitere Wärmezuführung über den ersten Wärmetauscher benötigt.

Vorzugsweise bilden die Fernwärmenetz-Vorlaufübergabestation und/oder die Fernwärmenetz-Rücklaufübergabestation und/oder eine Wärmeträgermediumübergabestation für das zweite Wärmeträgermedium eine Einheit mit dem Rohrleitungssystem. Bilden einige oder alle der genannten Übergabestationen eine Einheit mit dem Rohrleitungssystem, so kann eine besonders kompakte Bauform des Rohrleitungssystems erreicht werden. Es kann ein komplettes System, beispielsweise in Form einer Kompaktstation, bereitgestellt werden, das mit wenig Platzbedarf, beispielsweise in einem Keller eines Hauses, installiert werden kann. Eine Fernwärmenetz-Vorlaufübergabestation umfasst vorzugsweise Elemente wie Ventile, Regler, Wärmemengenzähler oder auch Durchflussmengenzähler. So kann die Verbindung zum Fernwärmenetz einfach herstellbar und zeitsparend überwachbar sein. Eine Fernwärmenetz-Rücklaufübergabestation umfasst vorzugsweise ebenfalls Elemente wie Ventile, Regler, Wärmemengenzähler oder auch Durchflussmengenzähler. So kann auch hier die Verbindung zum Fernwärmenetz einfach herstellbar und überwachbar sein. Besonders können in der Fernwärmenetz-Rücklaufübergabestation gegebenenfalls Vergleichswerte zu Messwerten bestimmt werden, die in der Fernwärmenetz-Vorlaufübergabestation ermittelt werden.

Vorzugsweise ist eine Mehrzahl von Wärmeträgermedium-Pufferspeichern vorhanden, die mit dem zweiten Wärmerohrsystem fluidverbunden ist. Eine Mehrzahl von Wärmeträgermedium-Pufferspeichern können den Vorteil haben, dass im Bedarfsfall eine größere Menge des zweiten Wärmetransportmediums zur Verfügung steht, als in einem einfachen Rohrleitungssystem, einem einzigen Wärmeträgermedium-Pufferspeicher oder auch einem einzigen Zirkulationskreislauf zwischengespeichert sein kann. Der Bedarf an Wärmeträgermedium-Pufferspeichern richtet sich beispielsweise nach dem erwarteten zweiten Wärmeträgermediumbedarf, zum Beispiel dem Wasserbedarf. Beim erwarteten Wasserverbrauch von etwa 600 Litern pro Tag kann ein Pufferspeichervolumen von etwa 300 Litern Fassungsvermögen angemessen sein. Es können also beispielsweise zwei Wärmeträgermedium-Pufferspeicher mit jeweils 150 Litern Fassungsvermögen vorhanden sein oder, bei entsprechendem Bedarf, beispielsweise drei Wärmeträgermedium-Pufferspeicher mit jeweils 300 Litern Fassungsvermögen. Vorzugsweise sind einige oder alle der mehreren Wärmeträgermedium-Pufferspeicher in Form einer Parallelschaltung angeordnet. So kann in diesen Wärmeträgermedium-Pufferspeichern jeweils die gleiche Erwärmungsumgebungsbedingung vorhanden sein, was das Bereitstellen einer großen Menge von zweitem Wärmeträgermedium mit gleicher Temperatur ermöglicht.

In einer bevorzugten Ausführungsform ist das erste Wärmeträgermedium Wasser und das zweite Wärmeträgermedium Trinkwasser. Entsprechend ist das zweite Wärmerohrnetz vorzugsweise ein Trinkwasserrohrnetz. Trinkwasser im Sinne der Erfindung ist solches Wasser, das eine Wasserqualität aufweist, die das Wasser beispielsweise zum Trinken geeignet erscheinen lässt. Entsprechend ist es solches Wasser, das allgemein einer Trinkwasserleitung, also einem Trinkwasserrohrsystem, eines Hauses entnommen werden kann. Es entspricht somit dem Wasser, das in einem Haushalt einem Wasserhahn entnommen werden kann und eine Hygienequalität aufweist, die es für den Menschen gefahrlos zum Verzehr als Lebensmittel verträglich macht. Das zweite Wärmerohrnetz kann aber auch solches Wasser enthalten, das nicht trinkbar ist. Dann ist das Wärmerohrnetz vorzugsweise ein Heizungsrohrnetz, das Wärme zum Beheizen beispielsweise von Räumen bereitstellt, oder ein Bewässerungsnetz, das Warmwasser zum Gießen beispielsweise von Pflanzen bereitstellt oder ein Waschwassernetz, das warmes Wasser beispielsweise zum Reinigen von Landebahnen, Straßen, Fahrzeugen, Wegen oder Fassaden bereitstellt. Es kann auch beispielsweise ein Löschwassernetz sein, wenn vorgeheiztes Löschwasser bereitgestellt werden soll.

In einer bevorzugten Ausführungsform ist das Rohrleitungssystem ein Hausrohrleitungssystem. Ein Haus kann ein Wohnhaus sein, ein Stall, ein Hotel, ein Kasernengebäude, ein Wohnblock, ein Geschäftshaus, ein Lagerhaus, eine Schwimmhalle, eine Sporthalle, ein Gewächshaus oder auch ein Verwaltungsgebäude, allgemein somit auch einfach ein Gewerbegebäude. Dies zeigt, dass im Prinzip jedes Bauwerk, in dem sich Menschen oder Tiere aufhalten können, ein Haus im Sinne der Erfindung sein kann. Statt eines Hausrohrleitungssystem kommt aber auch ein Freiluftrohrleitungssystem in Frage, dass unter freiem Himmel im Erdboden verlegt ist. Das wird bevorzugt dann der Fall sein, wenn ein zweites Wärmeträgermedium in einem im Wesentlichen offenen Gelände und nicht in einem Bauwerk bereitgestellt werden soll.

In einer bevorzugten Ausführungsform ist der erste Wärmetauscher ein Rohrbündelwärmeübertrager. Ein Rohrbündelwärmeübertrager hat sich als besonders vorteilhafter Wärmetauscher erwiesen, da er eine große Oberfläche aufweist und so eine gute Wärmeübertragung zwischen erstem Wärmerohrsystem und zweitem Wärmerohrsystem ermöglicht wird. Alternativ können aber auch andere Wärmetauscher eingesetzt werden, wie Plattenradiatoren, U-Rohrwärmeübertrager oder auch Spiralwärmeübertrager. Andere dem Fachmann bekannte Bauformen können ebenfalls geeignet sein. Auch der zweite Wärmetauscher kann derart ausgeführt sein.

Erfindungsgemäß ist in dem Wärmerohrsystem eine Strahlpumpe angeordnet. Es ist erwünscht, das erste Wärmeträgermedium mit einer Temperatur von 60 °C bis 70°C in den Wärmetauscher einzuleiten. Das erste Wärmeträgermedium wird aber häufig mit einer unverhältnismäßig hohen Temperatur von 90 °C, beispielsweise im Sommer, bis 180 °C, beispielsweise im Winter, aus dem Fernwärmenetz-Vorlauf bereitgestellt. Eine Strahlpumpe kann vorteilhaft sein, die Temperatur des Wärmeträgermediums vor Eintritt in den Wärmetauscher entsprechend abzusenken, um beispielsweise auch einer Verkalkung entgegenzuwirken. Dazu kann sie das abgekühlte Wärmeträgermedium aus dem Primärrücklauf zwischen erstem Wärmetauscher und zweitem Ende des Wärmerohrsystems dem ersten Wärmeträgermedium beimischen, das mit hoher Temperatur aus dem Fernwärmenetz durch das erste Ende in das erste Wärmerohrsystem eingeleitet wird. Die Strahlpumpe weist zwei Eingänge und einen Ausgang auf. Der erste Eingang ist mit dem ersten Ende des Wärmerohrsystems fluidverbunden. Der zweite Eingang ist über einen Rohrabzweig, also eine Beimischleitung, mit dem Rohrabschnitt zwischen erstem Wärmetauscher und zweitem Ende des Wärmerohrsystems, order zwischen zweitem Wärmetauscher und zweitem Ende des ersten Wärmerohrsystems, fluidverbunden. In einer anderen Ausführungsform der Erfindung kann der zweite Eingang beispielsweise mittels einer T-Verbindung mit einer Wärmeträgermediumabflussöffnung des ersten Wärmetauschers verbunden sein. Der Ausgang der Strahlpumpe führt jeweils vorzugsweise direkt zu einer Wärmeträgerzuflussöffnung des ersten Wärmetauschers. So kann dem zwischen 90 °C und 180 °C heißen ersten Wärmeträgermedium, das in das erste Ende des Wärmerohrsystems aus dem Fernwärmenetz-Vorlauf einströmt, etwa 35 °C warmes erstes Wärmeträgermedium aus dem Primärrücklauf des ersten Wärmerohrsystems beigemischt werden, oder es kann erstes Wärmeträgermedium unmittelbar aus der Wärmeträgermediumabflussöffnung des ersten Wärmetauschers mit einer Temperatur von beispielsweise 50 °C bis 60 °C beigemischt werden, sodass vorteilhafterweise jeweils durch die Strahlpumpe in den ersten Wärmetauscher ein Wärmeträgermedium mit einer Temperatur von etwa 60 °C bis 70°C eingeleitet wird. Als besonders geeignet haben sich diesbezüglich Strahlpumpen der Hersteller Bälz und ERST erwiesen. Statt einer Strahlpumpe kann, falls dies beispielsweise aus Kostengründen gewünscht ist, jedoch auch ein einfaches automatisches Mischventil zum Einsatz kommen. Das kann eine kostengünstigere Lösung sein.

Bei einem Verfahren zum Erwärmen eines zweiten Wärmeträgermediums eines zweiten Wärmerohrsystem eines Rohrleitungssystems ist bevorzugt, dass der Wärmeträgermedium-Pufferspeicher verglichen mit seinem Wärmeträgermediumeinlauf abschnittsweise aufgeweitet ist. Dadurch können die voranstehend beschriebenen Vorteile erreichbar sein.

Weiterhin ist in einem Verfahren zum Erwärmen von Wärmeträgermedium bevorzugt, dass das zweite Wärmeträgermedium in dem Wärmeträgermedium-Pufferspeicher zusätzlich durch eine Solarthermieanlage erwärmt wird. Wie voranstehend beschrieben, kann erstens beispielsweise Wasser in einem Trinkwasser-Pufferspeicher, wo es ruhend zwischengespeichert ist, einfacher erhitzbar sein als in einem Rohrsystem, das von dem Wasser mit hoher Geschwindigkeit fließend durchströmt wird. Zweitens kann durch die zusätzliche Erwärmung, beispielsweise Solarthermieerwärmung, zusätzlich kostenlos oder kostengünstig bereitstehende Wärme genutzt werden, um eine große Menge des zweite Wärmeträgermediums vorzuwärmen, sodass nur noch sehr wenig Primärwärme aus dem Fernwärmenetz bezogen und auf das zweite Wärmeträgermedium übertragen werden muss. Dies kann sich vorteilhaft auf die Verbrauchskosten und Anschlusskosten auswirken.

In einem Verfahren zum Erwärmen von Wärmeträgermedium ist weiterhin bevorzugt, dass das zweite Wärmeträgermedium zunächst in einen Wärmeträgermedium-Pufferspeicher einströmt, der durch die Sekundärseite eines zweiten Wärmetauschers gebildet ist, dort einen ersten Abschnitt des zweiten Wärmetauschers durchströmt, wobei in dem ersten Abschnitt Wärmeübertragungsmittel zum Übertragen von Restwärme aus einem ersten Wärmerohrsystem angeordnet sind, anschließend einen zweiten Abschnitt des Wärmeträgermedium-Pufferspeichers durchströmt, wobei in den zweiten Abschnitt Wärmeübertragungsmittel zum Übertragen von Wärme aus einer zusätzlichen Wärmequelle angeordnet sind und schließlich aus dem Wärmeträgermedium-Pufferspeicher in einen Zirkulationskreislauf strömt, der durch einen ersten Wärmetauscher zusätzliche Wärme aus dem ersten Wärmerohrsystem entnehmen kann, die eine höhere Temperatur hat als diese Restwärme, die im ersten Abschnitt des zweiten Wärmetauschers bereitgestellt wird. Auf diese Weise kann eine besonders gute stufenweise Erwärmung des zweiten Wärmeträgermediums ermöglicht werden, die besonders effizient und umweltfreundlich sein kann. Zuerst wird das zweite Wärmeträgermedium im Wärmeträgermedium-Pufferspeicher durch Restwärme aus dem ersten Wärmerohrsystem vorgewärmt, dann erfolgt eine weitere Erwärmung durch Solarthermie und schließlich erfolgt nach dem Ausströmen aus dem Wärmeträgermedium-Pufferspeicher eine weitere Erhitzung durch Primärwärme über den ersten Wärmetauscher nur noch insoweit, wie es notwendig ist, um die gewünschte Zieltemperatur zu erreichen. Eine bevorzugte Zieltemperatur des zweiten Wärmeträgermediums ist 55° C, aber auch höhere oder niedrigere Zieltemperaturen, wie 45° C oder 65° C oder sämtliche Temperaturwerte dazwischen oder auch außerhalb dieses Intervalls können erwünscht sein.

### Kurzbeschreibung der Zeichnungen

Weitere vorteilhafte Ausgestaltungen werden nachfolgend anhand der in den Zeichnungen dargestellten Ausführungsbeispiele, auf welche die Erfindung jedoch nicht beschränkt ist, näher beschrieben.

Es zeigen schematisch:
- Figur 1: eine Systemzeichnung einer ersten Ausführung eines erfindungsgemäßen Rohrleitungssystems;
- Figur 2a: eine Systemzeichnung einer zweiten Ausführung eines erfindungsgemäßen Rohrleitungssystems;
- Figur 2b: die zweite Ausführungsform in einem Schaltzustand, in dem zweites Wärmeträgermedium in den Wärmeträgermedium-Pufferspeicher aus dem Zirkulationskreislauf rückgespeist wird.
- Figur 3a: eine Systemzeichnung einer dritten Ausführung eines erfindungsgemäßen Rohrleitungssystems;
- Figur 3b: die dritte Ausführungsform in einem Schaltzustand, in dem zweites Wärmeträgermedium in den Wärmeträgermedium-Pufferspeicher aus dem Zirkulationskreislauf rückgespeist wird;
- Figur 4a: eine Systemzeichnung einer vierten Ausführung eines erfindungsgemäßen Rohrleitungssystems;
- Figur 4b: die vierte Ausführungsform in einem Schaltzustand, in dem zweites Wärmeträgermedium in den Wärmeträgermedium-Pufferspeicher aus dem Zirkulationskreislauf rückgespeist wird; und
- Figur 5: ein Diagramm, das mögliche Steigerungen im Energieertrag in Abhängigkeit von der Rücklauftemperatur des Primärrücklaufs zeigt.

### Detaillierte Beschreibung von Ausführungen der Erfindung

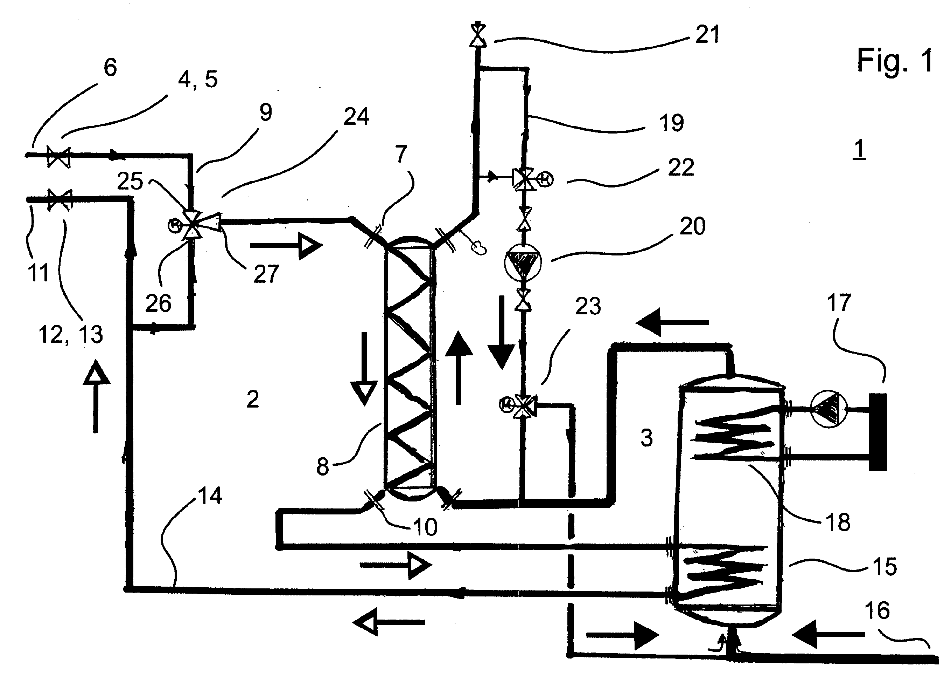

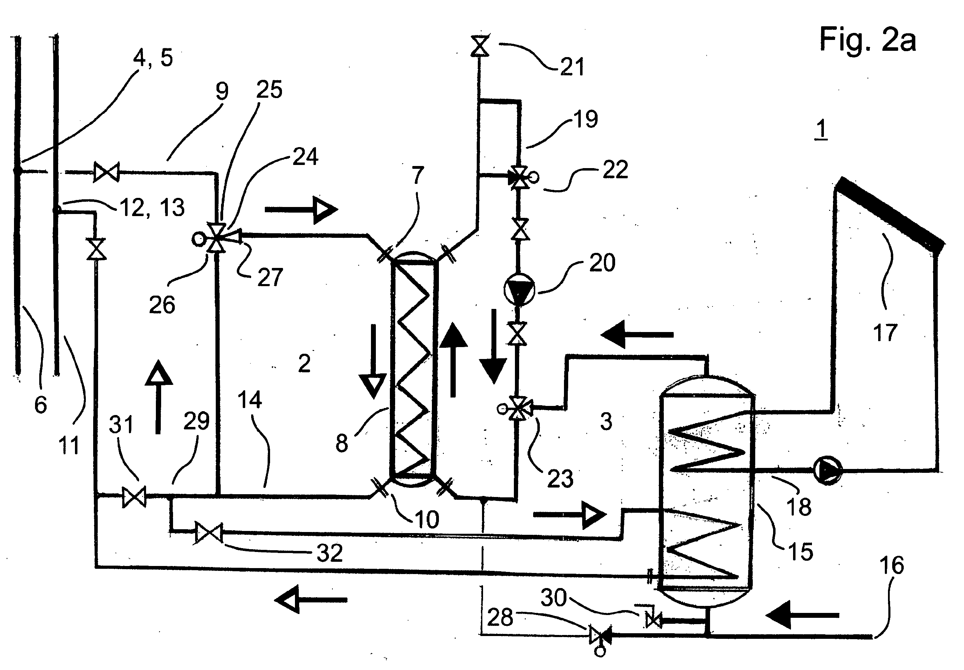

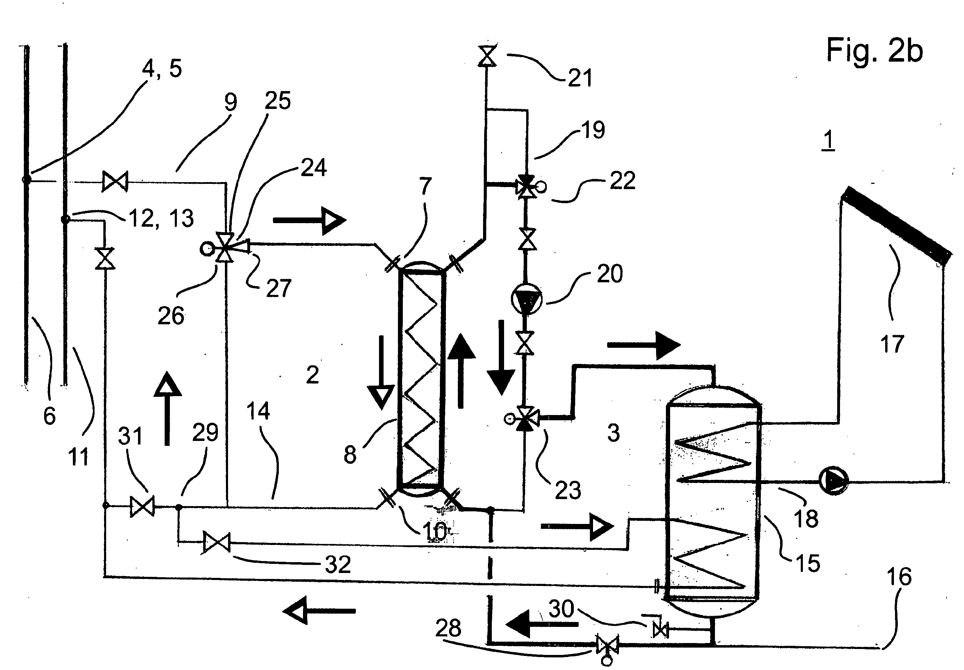

Figur 1 zeigt ein erstes Ausführungsbeispiel eines erfindungsgemäßen Rohrleitungssystems 1, ausgeführt als Hausrohrleitungssystem zur Trinkwassererwärmung, an dem zunächst die grundsätzlichen Merkmale eines solchen Rohrleitungssystems 1 illustriert werden. Die Ausführungsbeispiele in den Figuren 2, 3 und 4 zeigen vergleichbare erfindungsgemäße Rohrleitungssysteme 1, die sich jeweils in Details vom Rohrleitungssystem 1 aus Figur 1 unterscheiden. Die entsprechenden Detailunterschiede werden an gegebener Stelle erörtert. Es versteht sich von selbst, dass gleiche Bezugszeichen in den unterschiedlichen Ausführungsbeispiele für gleiche oder vergleichbare Elemente stehen, so dass sich wiederholende Einlassungen zu den jeweiligen Ausführungsbeispielen erlässlich sind.

Ein erfindungsgemäßes Rohrleitungssystem 1 umfasst ein erstes Wärmerohrsystem 2 und ein zweites Wärmerohrsystem 3. Über ein erstes Ende 4 des ersten Wärmerohrsystems 2 wird mittels einer Fernwärmenetz-Vorlaufübergabestation 5 ein erstes Wärmeträgermedium aus einem Fernwärmenetzvorlauf 6 in das erste Wärmerohrsystem 2 eingespeist. Das erste Wärmeträgermedium ist in diesem Fall flüssiges Wasser oder auch Wasserdampf mit einer Temperatur von im Sommer beispielsweise 90 °C und im Winter beispielsweise 180 °C. Die Pfeile, deren Pfeilspitzen nicht ausgefüllt sind und die benachbart zu dem ersten Wärmerohrsystem 2 in den Figuren eingezeichnet sind, kennzeichnen jeweils die Strömungsrichtung des ersten Wärmeträgermediums im ersten Wärmerohrsystem 2.

Das erste Wärmeträgermedium strömt in allen drei gezeigten Ausführungsbeispielen durch einen ersten Rohrleitungsabschnitt und fließt durch eine Wärmeträgermediumzuflussöffnung 7 primärseitig in einen ersten Wärmetauscher 8 ein. Der erste Rohrleitungsabschnitt zwischen erstem Ende 4 des Wärmerohrsystems 2 und Wärmeträgermediumzuflussöffnung 7 wird auch als Primärvorlauf 9 bezeichnet. Anschließend durchströmt das Wärmeträgermedium den ersten Wärmetauscher 8, in diesem Fall einen Rohrbündelwärmeübertrager, durch den Wärme, die in dem ersten Wärmeträgermedium gespeichert ist, an ein zweites Wärmeträgermedium im zweiten Wärmerohrsystem 3 übertragen werden kann. Durch den ersten Wärmetauscher 8 wird also im Betriebszustand des Hausleitungsrohrsystems 1 das in dem zweiten Wärmerohrsystem 3 enthaltene zweite Wärmeträgermedium erhitzt. Das zweite Wärmeträgermedium ist im vorliegenden Beispiel Trinkwasser. Entsprechend wird das erste Wärmeträgermedium im ersten Wärmerohrsystem 2 beim Durchströmen des ersten Wärmetauschers 8 abgekühlt, denn ein Teil seiner Wärme wird an das zweite Wärmeträgermedium im zweiten Wärmerohrsystem 3 abgegeben. Das erste Wärmeträgermedium verlässt den ersten Wärmetauscher 8 durch eine Wärmeträgermediumabflussöffnung 10 und strömt daraufhin mit einer Restwärme von etwa 50 °C bis 60 °C weiter in Richtung eines Fernwärmenetz-Rücklaufes 11, der über ein zweite Ende 12 des ersten Wärmerohrsystems 2 und eine an dem zweiten Ende als Abschluss des ersten Wärmerohrsystems 2 angeordnete Fernwärmenetz-Rücklaufübergabestation 13 angebunden ist.

Problematisch kann prinzipiell sein, dass das erste Wärmeträgermedium in dem Rohrabschnitt zwischen Wärmeträgermediumabflussöffnung 10 des ersten Wärmetauschers 8 und zweitem Ende 12 des ersten Wärmerohrsystems 2, der auch als Primärrücklauf 14 bezeichnet wird, trotz der Wärmeübertragung im ersten Wärmetauscher 8 vom ersten Wärmerohrsystem 2 auf das zweite Wärmerohrsystem 3 immer noch eine Temperatur aufweist, die deutlich über einer erwünschten Fernwärmenetzrücklauftemperatur von etwa 35 C, beispielsweise nämlich noch bei 50 °C bis 60 °C, liegt. Um diesem Problem zu begegnen, wird in dem vorliegenden Rohrleitungssystem 1 vorgeschlagen, zwischen Wärmetauscher 8 und zweitem Ende 12 des ersten Wärmerohrsystems 2 erneut Wärme, also Restwärme des Wärmeträgermediums, zu entnehmen, um das zweite Wärmeträgermedium im zweiten Wärmeträgerrohrsystem 3 zu erwärmen. Zu diesem Zweck weist das zweite Wärmerohrsystem 3 einen Wärmeträgermedium-Pufferspeicher als Reservoir für das zweite Wärmeträgermedium auf. Im Wärmeträgermedium-Pufferspeicher wird ein viel größeres Speichervolumen für Wärme bereitgestellt als in einem einfachen Leitungsrohr. Daher kann einerseits eine große Menge des zweiten Wärmeträgermediums besonders gut erwärmt werden. Andererseits kann das erste Wärmeträgermedium stärker abgekühlt werden, um die Rückströmtemperatur des ersten Wärmeträgermediums in den Fernwärmenetzrücklauf 11 weiter zu senken.

Um eine besonders hohe Effizienz erreichen zu können, erfolgt die Restwärmeentnahme zur Vorerwärmung des zweiten Wärmeträgermediums als letzte Verbraucherwärmeentnahme aus dem ersten Wärmerohrsystem 2, bevor das erste Wärmeträgermedium das zweite Ende 12 des ersten Wärmerohrsystems 2 erreicht. Zu diesem Zweck ist in dem Wärmerohrsystem 3 ein zweiter Wärmetauscher 15 vorhanden. Er stellt sekundärseitig den Wärmeträgermedium-Pufferspeicher bereit, und zwar als zylindrischer Wassertank. Wie zu erkennen ist, ist der Wassertank im Vergleich zu seinem Wärmeträgermediumeinlauf abschnittsweise aufgeweitet. Der Durchmesser des Wassertanks senkrecht zur Strömungsrichtung beträgt ein Vielfaches verglichen mit dem Durchmesser des Wärmeträgermediumeinlaufs. Durch den zweiten Wärmetauscher 15 verläuft der Rohrleitungsabschnitt, der zwischen Wärmeträgermediumabflussöffnung 10 des ersten Wärmetauschers 8 und zweitem Ende 12 des ersten Wärmerohrsystems 2 angeordnet ist, also der Primärrücklauf 14, abschnittsweise hindurch, um das zweite Wärmeträgermedium in dem zweiten Wärmetauscher 15 zu erwärmen. Der Wärmeträgermedium-Pufferspeicher ist in diesem Fall innerhalb des Wärmerohrsystems 3 unmittelbar hinter einem Wärmeträgermediumübergabepunkt 16 einer Wärmeträgermediumübergabestation (nicht gezeigt) angeordnet. Das bedeutet eine hohe Temperaturspreizung zwischen dem ersten Wärmeträgermedium, das im Primärrücklauf 14 hinter dem Wärmetauscher 8 noch eine Temperatur von zwischen 50 °C und 60 °C aufweist, und dem zweiten Wärmeträgermedium, das für gewöhnlich mit einer Temperatur von etwa 10 °C netzseitig bereitgestellt wird. Das zweite Wärmeträgermedium kann entsprechend in dem Wärmeträgermedium-Pufferspeicher, der die Sekundärseite des zweiten Wärmetauschers 15 darstellt, auf eine Temperatur von 20 °C bis 40 °C vorerwärmt werden. Die Pfeile, deren Pfeilspitzen ausgefüllt sind und die benachbart zu dem zweiten Wärmerohrsystem 3 in den Figuren 1 bis 4 eingezeichnet sind, kennzeichnen die Strömungsrichtung des zweiten Wärmeträgermediums im zweiten Wärmerohrsystem 3.

In den vorliegenden Ausführungsbeispielen gemäß den Figuren 1, 2 und 4 ist als zusätzliche Wärmequelle zum Erwärmen des zweiten Wärmeträgermediums eine Solarthermieanlage 17 vorhanden. Das erste Wärmerohrsystem 2, das zweite Wärmerohrsystem 3 und ein Rohrsystem der Solarthermieanlage 17 sind fluidgetrennt. Die Solarthermieanlage 17 ist jedoch mit dem zweiten Wärmerohrsystem 3 wärmeleitend verbunden. Die Solarthermieanlage 17 überträgt also Wärme unmittelbar auf das zweite Wärmeträgermedium innerhalb des Wärmeträgermedium-Pufferspeichers des zweiten Wärmetauschers 15. So kann das zweite Wärmeträgermedium in dem Wärmeträgermedium-Pufferspeicher unter gemeinsamer Wirkung der Restwärmevorheizung aus dem Primärrücklauf 14 und der Solarthermie sogar auf Temperaturen von ungefähr 60 °C erhitzt werden. Es hat sich diesbezüglich als günstig erwiesen, das noch kalte zweite Wärmeträgermedium, nachdem es aus dem Wärmeträgermediumnetz bezogen worden ist, in einem ersten Abschnitt des Wärmeträgermedium-Pufferspeichers zuerst über die Restwärme aus dem Primärrücklauf 14 des zweiten Wärmerohrsystems 2 zu erwärmen und anschließend die Wärme aus der Solarthermieanlage 17 zu nutzen, um in einem zweiten Abschnitt des Wärmeträgermedium-Pufferspeichers die Temperatur des Wärmeträgermediums nochmals zu erhöhen. So ist sichergestellt, dass möglichst viel Wärmeenergie aus der Solarthermieanlage 17 tatsächlich genutzt wird und zugleich eine optimale Abkühlung des ersten Wärmeträgermediums im ersten Abschnitt des Wärmeträgermedium-Pufferspeichers, wo das zweite Wärmeträgermedium noch eine niedrige Temperatur hat, zu ermöglichen.

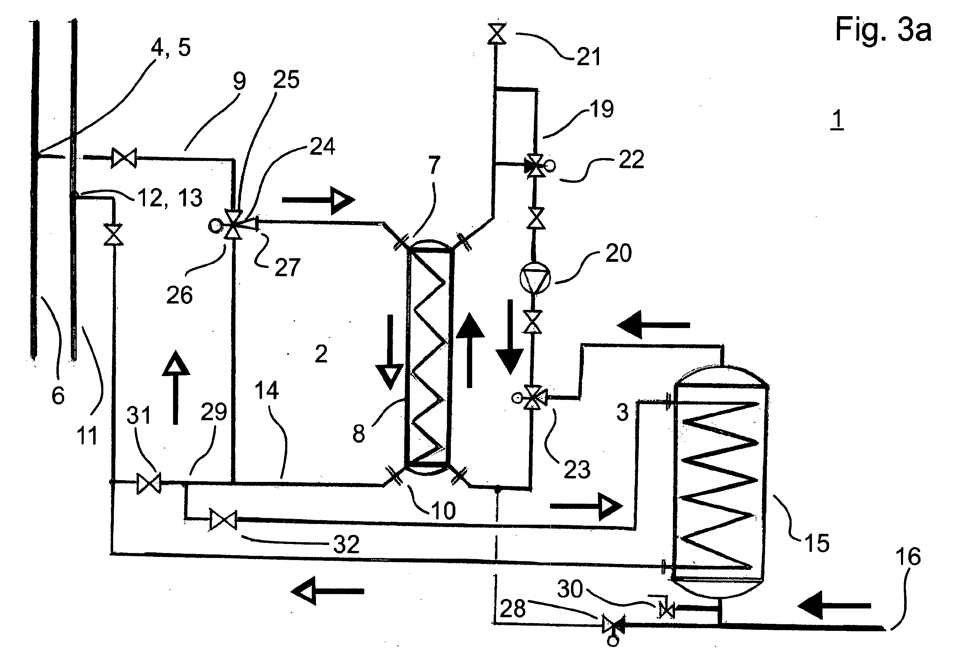

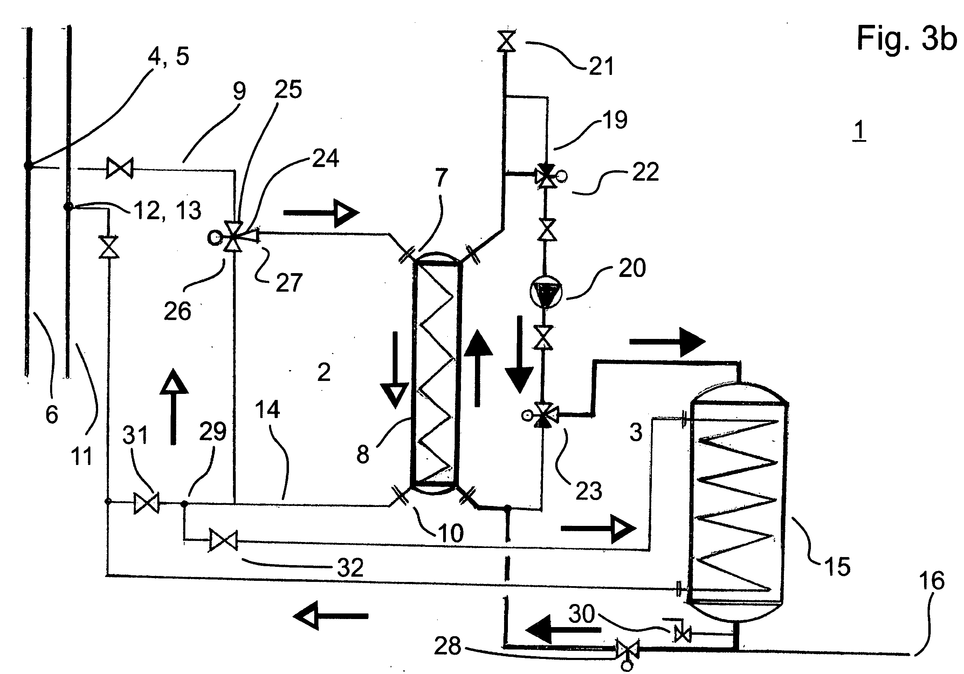

Zum Zweck der Wärmeübertragung ist die Solarthermieanlage 17 thermisch in vergleichbarer Weise an den zweiten Wärmetauscher 15 gekoppelt, wie der Rohrabschnitt des ersten Wärmerohrsystems 2, der den Wärmeträgermedium-Pufferspeicher durchläuft. Das bedeutet, ein Rohrsegment 18 der Solarthermieanlage 17 durchläuft abschnittsweise den Wärmeträgermedium-Pufferspeicher und erhitzt dort das zweite Wärmeträgermedium. Dieses Rohrsegment 18 der Solarthermieanlage 17 ist dabei in diesem Fall in einem Abschnitt des Wärmeträgermedium-Pufferspeichers, also in diesem Fall in einem Abschnitt des zweiten Wärmetauschers 15, angeordnet, der, bezogen auf die Flussrichtung des Wärmeträgermediums, dem ersten Abschnitt, in der das zweite Wärmeträgermedium über Restwärme aus dem ersten Wärmerohrsystem 2 vorgewärmt wird, nachgelagert ist. In den Figuren 1, 2 und 4 sind jeweils Ausführungsbeispiele gezeigt, in denen jeweils in ungefähr einem Drittel des Wärmeträgermedium-Pufferspeichers durch entsprechende Rohrsegmente Solarthermie und Restwärme des Primärrücklaufs 14 an das zweite Wärmeträgermedium übertragen. In Figur 3 ist keine Solarthermieanlage 17 vorgesehen. Stattdessen ist ein Rohrsegment des Primärrücklaufs 14 auf nahezu der vollen Länge des Wärmeträgermedium-Pufferspeichers in diesem angeordnet. So kann eine besonders effiziente Wärmeentnahme aus dem Primärrücklauf 14 und somit eine stärkere Abkühlung des ersten Wärmeträgermediums ermöglicht werden.

Aus dem zweiten Wärmetauscher 15 strömt das zweite Wärmeträgermedium vorerwärmt in einen Zirkulationskreislauf 19, und zwar immer dann, wenn zweites Wärmeträgermedium dem Zirkulationskreislauf 19 entnommen wird. In dem Zirkulationskreislauf 19 passiert das zweite Wärmeträgermedium dann den ersten Wärmetauscher 8, um je nach Bedarf zusätzliche Wärme aus dem Primärvorlauf 9 des ersten Wärmerohrsystems 2, also Primärwärme, aufzunehmen. Man erkennt in den Figuren, dass das erste Wärmeträgermedium und das zweite Wärmeträgermedium im Bereich des ersten Wärmetauschers 8 im vorliegenden Ausführungsbeispiel zueinander gegenläufig strömen, wodurch eine gute Wärmeübertragung sichergestellt werden kann. Im Zirkulationskreislauf 19 ist eine Zieltemperatur des zweiten Wärmeträgermediums von etwa 55 °C erwünscht. Je nach bereits erfolgter Vorerwärmung durch die Restwärme aus dem Primärrücklauf 14 und die Solarthermie im zweiten Wärmetauscher 15, der sekundärseitig als Wärmeträgermedium-Pufferspeicher ausgeführt ist, kann die zusätzliche Primärwärmeübernahme aus dem ersten Wärmetauscher 8 sehr gering ausfallen. Eine Folge davon kann sein, dass die Anschlussleistung des Wärmerohrsystems 2 möglicherweise nach unten angepasst werden kann, so dass der Verbraucher Kosten sparen kann. Eine Zirkulationspumpe 20 im Zirkulationskreislauf 19 sorgt dafür, dass das zweite Wärmeträgermedium im Zirkulationskreislauf 19 mit einer geeigneten Geschwindigkeit gepumpt wird, um die Zieltemperatur konstant bereitstellen zu können. Möchte der Verbraucher schließlich warmes zweites Wärmeträgermedium aus dem zweiten Wärmerohrsystem 3 entnehmen, so kann er dies über beispielsweise einen Wasserhahn 21 tun. Dadurch, dass die Anlage einen Zirkulationskreislauf 19 umfasst, steht das warme zweite Wärmeträgermedium nach dem Öffnen des Wasserhahns 21 bereits nach relativ kurzer Wartezeit zur Verfügung. Wie vorangehend beschrieben, wird entnommenes zweites Wärmeträgermedium durch zweites Wärmeträgermedium aus dem Wärmeträgermedium-Pufferspeicher ersetzt, der dann wiederum mit zweitem Wärmeträgermedium aus dem Netz automatisch befüllt wird.

Um den Verbraucher vor Gesundheitsgefahren besser schützen zu können, verfügt der Zirkulationskreislauf 19 über ein erstes Legionellenumschaltventil 22. Es hat sich als zweckdienlich und ausreichend erwiesen, zweite Wärmerohrsysteme 3, wenn sie wie in diesem Fall als Trinkwasserrohrsysteme ausgeführt sind, einmal täglich mit 60 °C heißem Wärmeträgermedium durchströmen zu lassen, um damit gefährliche Legionellen abtöten zu können. Das erste Legionellenumschaltventil 22 ist zu diesem Zweck so angeordnet, dass der Zirkulationskreislauf 19 in den entsprechenden Intervallen mit dem geeignet erhitzten zweiten Wärmeträgermedium gespült werden kann. Das zweite Wärmeträgermedium wird durch den durch Schalten des ersten Legionellenumschaltventils 22 verkürzten Flussweg derart stark erhitzt, dass die notwendige, erhöhte Wassertemperatur bequem erreicht werden kann.

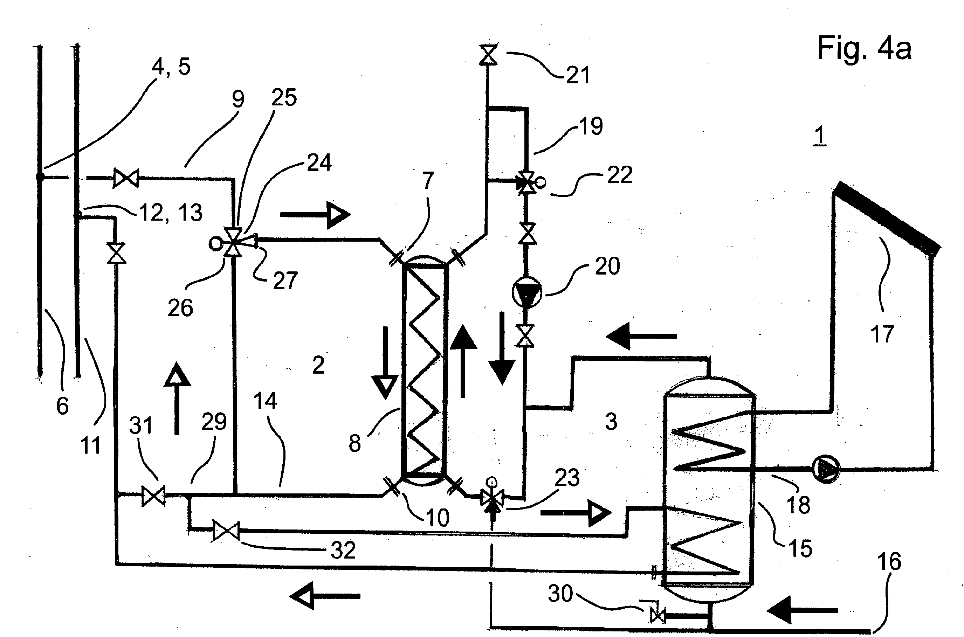

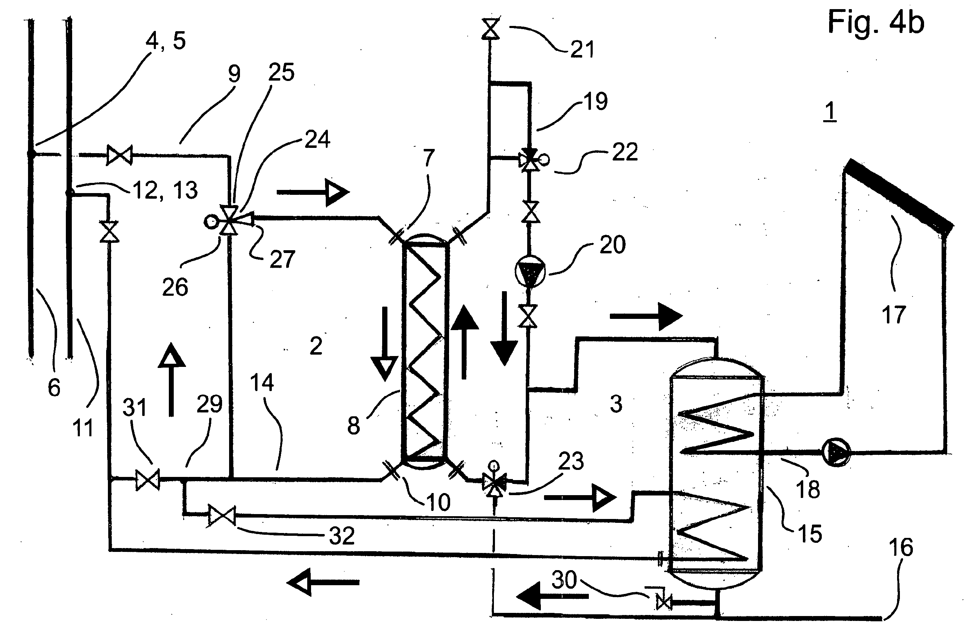

Zudem ist in allen Ausführungsbeispielen ein zweites Legionellen-Umschaltventil 23, ausgeführt als Dreiwegeventil, vorhanden. Das zweite Legionellenumschaltventil 23 verbindet in den Ausführungsformen, die in den Figuren 1 und 4 dargestellt sind, den Zirkulationskreislauf 19 mit dem sekundärseitigen Wärmeträgermediumeinlauf des zweiten Wärmetauschers 15, also dem Wärmeträgermediumeinlauf des Wärmeträgermedium-Pufferspeichers. In den Ausführungsbeispielen nach den Figuren 2 und 3 verbindet das zweite Legionellenumschaltventil 23 den Zirkulationskreislauf 19 mit dem sekundärseitigen Wärmeträgermediumablauf des zweiten Wärmetauschers 15, also dem Wärmeträgermediumablauf des Wärmeträgermedium-Pufferspeichers. So kann jeweils auch der Wärmeträgermedium-Pufferspeicher einmal am Tag mit auf 60 °C erhitztem zweitem Wärmeträgermedium gespült werden, um einer Legionellenverseuchung vorzubeugen. Das Wärmeträgermedium wird durch Aktivieren, bevorzugt zeitgesteuertes Aktivieren, des zweiten Legionellenumschaltventils 23 aus dem Zirkulationskreislauf 19 in denWärmeträgermedium-Pufferspeicher eingespeist, so dass der zweite Wärmetauscher 15 sekundärseitig zeitweise in den Zirkulationskreislauf 19 eingebunden wird. Wird das zweite Legionellenumschaltventil 23 betätigt, arbeitet die Zirkulationspumpe 20 also auch als Ladepumpe für den Wärmeträgermedium-Pufferspeicher.

Gemäß dem Ausführungsbeispiel nach Figur 1 kann das zweite Wärmeträgermedium durch Betätigen des zweiten Legionellenumschaltventils 23 über den Wärmeträgermediumeinlauf sekundärseitig in den Wärmeträgermedium-Pufferspeicher rückgespeist werden. In den Figuren 2, 3 und 4, insbesondere veranschaulicht in den Figuren 2b, 3b und 4b, wird das zweite Wärmeträgermedium hingegen über den Wärmeträgermediumablauf des Wärmeträgermedium-Pufferspeichers in den Wärmeträgermedium-Pufferspeicher rückgespeist. Das zweite Legionellenumschaltventil 23 fluidverbindet in den Ausführungsbeispielen nach den Figuren 2 und 3 den Wärmeträgermediumablauf mit dem Zirkulationskreislauf 19. Zudem besteht zwischen Wärmeträgermediumeinlauf und Zirkulationskreislauf eine Flussverbindung in Parallelschaltung zum Fluss durch den Wärmeträgermedium-Pufferspeicher, die bei diesen beiden Ausführungsformen durch ein Legionellenschutz-Durchflussventil 28 verschlossen werden kann. Soll, beispielsweise einmal pro Tag, zum Schutz gegen Keime, wie beispielsweise Legionellen, das zweite Wärmeträgermedium im Wärmeträgermedium-Pufferspeicher auf etwa 60 °C oder mehr erwärmt werden, wird durch Betätigen des zweiten Legionellenumschaltventils 23 und Betätigen des Legionellenschutz-Durchflussventils 28 das zweite Wärmeträgermedium gemäß den Figuren 2, 3 und 4 über den Wärmeträgermediumablauf in den Wärmeträgermedium-Pufferspeicher rückgeführt, bringt dort Primärwärme, die bereits aus dem ersten Wärmetauscher 8 aufgenommen worden ist, ein und strömt dann, in den Ausführungsbeispielen nach den Figuren 2 und 3 über das geöffnete Legionellenschutz-Durchflussventil 28, in den Zirkulationskreislauf 19 zurück. Soll das zweite Wärmeträgermedium den Wärmeträgermedium-Pufferspeicher von dem Zirkulationskreislauf 19 her füllen und in dem Wärmeträgermedium-Pufferspeicher aufgestaut werden, so kann gemäß den Ausführungen der Figuren 2 und 3 temporär das Legionellenschutz-Durchflussventil 28 verschlossen werden, beispielsweise für wenige Minuten.

Ein Ausführungsbeispiel, das besonders funktional und preisgünstig und daher besonders empfehlenswert sein kann, ist in Figur 4 dargestellt. Das zweite Legionellenumschaltventil 23 verbindet in Form eines T-Stücks den Zirkulationskreislauf 19 mit dem Wärmeträgermediumeinlauf des Wärmeträgermedium-Pufferspeichers. Dadurch kann das Legionellenschutz-Durchflussventil 28 eingespart werden. Wie in Figur 4a zu sehen ist, ist im Normalbetrieb das zweite Legionellenumschaltventil 23 so geschaltet, dass der Zirkulationskreislauf 19 in Betrieb ist und beim Entnehmen von zweitem Wärmeträgermedium aus dem Wasserhahn 21 selbsttätig zweites Wärmeträgermedium aus dem Wärmeträgermedium-Pufferspeicher in den Zirkulationskreislauf 19 nachströmt. Soll nun, wie in Figur 4b gezeigt ist, der Wärmeträgermedium-Pufferspeicher mittels zweitem Wärmeträgermedium aus dem Zirkulationskreislauf 19 gespült werden, wird das zweite Legionellenumschaltventil 23 so geschaltet, dass die Fluidverbindung zwischen Wärmeträgermediumeinlauf und Zirkulationskreislauf 19 hergestellt wird. Der direkte Durchfluss durch das zweite Legionellenumschaltventil 23 für zweites Wärmeträgermedium innerhalb des Zirkulationskreislaufs 19 wird hingegen blockiert. Dadurch wird die Zirkulationspumpe 20 zur Ladepumpe für den Wärmeträgermedium-Pufferspeicher und zweites Wärmeträgermedium strömt durch den Wärmeträgermediumablauf in den Wärmeträgermedium-Pufferspeicher zurück. Es durchläuft den Wärmeträgermedium-Pufferspeicher entgegen der üblichen Durchströmrichtung und fließt dann über die Fluidverbindung zwischen Wärmeträgermediumeinlauf und Zirkulationskreislauf 19 durch das zweite Legionellenumschaltventil 23 zurück in den Zirkulationskreislauf 19. Diese Ausführungsform ist besonders empfehlenswert, wenn eine preisgünstige und einfache Schaltung bereitgestellt werden soll, denn auf ein Legionellenschutz-Durchlaufventil 28 kann somit verzichtet werden.

Primärvorlauf 9 und Primärrücklauf 14 des ersten Wärmerohrsystems 2 sind in allen Ausführungsbeispielen parallel zum ersten Wärmetauscher 8 zudem über eine Strahlpumpe 24 fluidverbunden. Sie kann entsprechend dem Beispiel aus Figur 1 das abgekühlte erste Wärmeträgermedium mit einer Temperatur von beispielsweise 35 °C aus dem Primärrücklauf 14 des ersten Wärmerohrsystems 2 mit hocherhitztem erstem Wärmeträgermedium mit einer Temperatur von beispielsweise 90 °C oder 180 °C aus dem Primärvorlauf 9 vermischen, um für den ersten Wärmetauscher 8 eingangsseitig eine geeignete Wärmeträgermediumtemperatur von beispielsweise 60 °C bereitstellen zu können. Entsprechend umfasst die Strahlpumpe 24 zwei Eingänge 25, 26 und einen Ausgang 27. Der erste Strahlpumpeneingang 25 ist mit dem Primärvorlauf 9 fluidverbunden, während der zweite Strahlpumpeneingang 26 mit dem Primärrücklauf 14 fluidverbunden ist, und zwar in Figur 1 mit einem Rohrabschnitt des ersten Wärmerohrsystems 2, der in diesem Fall hinter dem zweiten Wärmetauscher 15 angeordnet ist. In den Figuren 2, 3 und 4 besteht stattdessen über eine T-Verbindung 29 eine Direktverbindung des zweiten Strahlpumpeneingangs 26 mit der Wärmeträgermediumabflussöffnung 10 des ersten Wärmetauschers 8, während der Anteil des ersten Wärmeträgermediums, der zum Erhitzen des zweiten Wärmeträgermediums verwendet wird, nach Durchströmen des Rohrabschnitts innerhalb des Wärmeträgermedium-Pufferspeichers auf direktem Weg zum Fernwärmenetzrücklauf 11 geleitet wird. So kann die Temperaturspreizung zwischen erstem Strahlpumpeneingang 25 und zweitem Strahlpumpeneingang 26 reduziert werden und eine weiter verbesserte Restwärmenutzung möglich sein. Der Strahlpumpenausgang 27 ist schließlich in allen drei Ausführungsbeispielen mit der Wärmeträgermediumzuflussöffnung 7 des ersten Wärmetauschers 8 verbunden und stellt dort jeweils ein geeignet gemischtes und somit passend temperiertes erstes Wärmeträgermedium bereit.

In den Ausführungsbeispielen nach den Figuren 2, 3 und 4 ist es möglich, den zweiten Wärmetauscher 15, also sowohl den Wärmeträgermedium-Pufferspeicher, als auch den durch den zweiten Wärmetauscher 15 verlaufenden Abschnitt des Primärrücklaufes 14, vollständig trockenzulegen, falls beispielsweise ein Austausch oder eine Reinigung des zweiten Wärmetauschers 15 erforderlich ist. Sekundärseitig kann dazu der Zufluss des zweiten Wärmeträgermediums über ein Stopventil 30 verhindert werden, so dass der Wärmeträgermedium-Pufferspeicher sukzessive vollständig entleert werden kann. Primärseitig kann ein erstes Blockadeventil 31, das im normalen Betrieb des ersten Wärmerohrsystems 2 geschlossen ist, geöffnet werden, so dass das erste Wärmeträgermedium, das aus dem ersten Wärmetauscher 8 über die Wärmeträgerabflussöffnung 10 austritt, direkt in Richtung des Fernwärmenetzrücklaufs 11 weiterströmen kann. Hingegen wird in diesem Fall ein zweites Blockadeventils 32, das im normalen Betrieb des Rohrleitungssystems geöffnet ist, geschlossen, so dass erstes Wärmeträgermedium, das aus dem ersten Wärmetauscher 8 über die Wärmeträgerabflussöffnung 10 austritt, nicht länger über den Rohrabschnitt des Primärrücklaufs 14, der das zweite Wärmeträgermedium über den zweiten Wärmetauscher erwärmt, in Richtung des Fernwärmenetzrücklaufs 11 weiterströmen kann. Der Betrieb des ersten Wärmerohrsystems 2 kann in den Ausführungsbeispielen nach den Figuren 2, 3 und 4 also selbst dann aufrechterhalten werden, wenn der zweite Wärmetauscher 15, beispielsweise aus Wartungsgründen, aus dem zweiten Wärmerohrsystem 3 entfernt werden muss.

Wie gezeigt kann mit der vorliegenden Erfindung durch Bereitstellen eines Wärmeträger-Pufferspeichers als Reservoir in einem zweiten Wärmerohrsystem 3 erreicht werden, dass die Temperaturspreizung des Primärvorlaufes 9, also des Rohrleitungsabschnittes des ersten Wärmerohrsystems 2 zwischen einem ersten Ende 4 des ersten Wärmerohrsystems 2 und eines ersten Wärmetauschers 8, und dem Primärrücklauf 14, also dem Rohrabschnitt des ersten Wärmerohrsystems 2 zwischen dem ersten Wärmetauscher 8 und dem zweiten Ende 12 des ersten Wärmerohrsystems 2, deutlich erhöht werden kann. Dies bedeutet zum einen, dass der Fernwärmelieferant darauf verzichten kann, den Fernwärmenetz-Rücklauf 11, beispielsweise über Kühltürme oder Kühlbecken, abzukühlen, zum anderen aber auch, dass der Fernwärmeverbraucher eine effektivere Fernwärmeentnahme aus dem ihm zur Verfügung gestellten Wärmeträgermedium erreichen kann. So wird ein sowohl in ökonomischer als auch in ökologischer Hinsicht verbessertes Rohrleitungssystem 1 mit einem ersten Wärmerohrsystem 2 und einem zweiten Wärmerohrsystem 3 bereitgestellt. Besonders vorteilhaft kann die zusätzliche Verwendung einer Solarthermieanlage 17 sein, um das zweite Wärmeträgermedium in dem Wärmeträger-Pufferspeicher noch stärker vorerwärmen zu können. Zudem ist ein besonderer Vorteil hinsichtlich gesundheitlicher Risiken erreichbar, wenn dem Wärmeträger-Pufferspeicher bereits erhitztes zweites Wärmeträgermedium aus einem Zirkulationskreislauf 19 zugeführt werden kann.

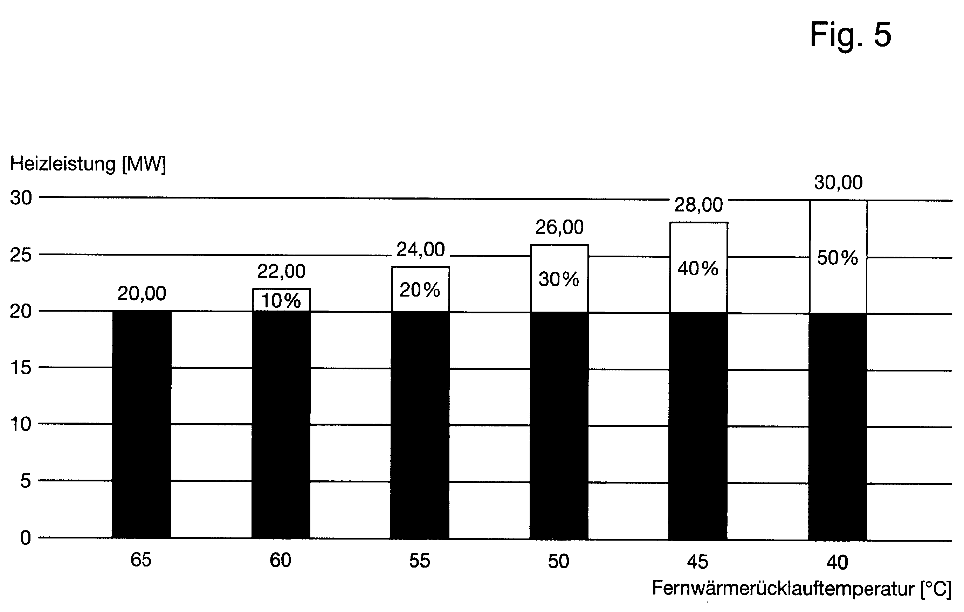

Figur 5 zeigt schließlich beispielhaft, mit welcher zusätzlich verfügbaren Heizleistung eine Absenkung der Fernwärmerücklauftemperatur einhergeht. Senkt man beispielsweise durch wie vorangehend beschriebene Maßnahmen zur Wärmeentnahme aus dem Primärrücklauf die Fernwärmerücklauftemperatur von 65 °C auf 40 °C ab, kann dadurch eine Steigerung der Heizleistung um beispielsweise 50% erreicht werden.

### Bezugszeichenliste

- 1: Rohrleitungssystem
- 2: erstes Wärmerohrsystem
- 3: zweites Wärmerohrsystem
- 4: erstes Ende
- 5: Fernwärmenetz-Vorlaufübergabestation
- 6: Fernwärmenetzvorlauf
- 7: Wärmeträgermediumzuflussöffnung
- 8: Erster Wärmetauscher
- 9: Primärvorlauf
- 10: Wärmeträgermediumabflussöffnung
- 11: Fernwärmenetzrücklauf
- 12: zweites Ende
- 13: Fernwärmenetz-Rücklaufübergabestation
- 14: Primärrücklauf
- 15: zweiter Wärmetauscher
- 16: Wärmeträgermediumübergabepunkt
- 17: Solarthermieanlage
- 18: Rohrsegment
- 19: Zirkulationskreislauf
- 20: Zirkulationspumpe / Ladepumpe
- 21: Wasserhahn
- 22: erstes Legionellenumschaltventil
- 23: zweites Legionellenumschaltventil
- 24: Strahlpumpe
- 25: erster Strahlpumpeneingang
- 26: zweiter Strahlpumpeneingang
- 27: Strahlpumpenausgang (geregelt)
- 28: Legionellenschutz-Durchflussventil
- 29: T-Verbindung
- 30: Stopventil
- 31: erstes Blockadeventil
- 32: zweites Blockadeventil

## Patentansprüche

1. Rohrleitungssystem (1)
mit einem ersten Wärmerohrsystem (2), das ein erstes Ende (4) aufweist, das mit einer Fernwärmenetz-Vorlaufübergabestation (5) verbindbar ist, und das ein zweites Ende (12) aufweist, das mit einer Fernwärmenetz-Rücklaufübergabestation (13) verbindbar ist, wobei das erste Wärmerohrsystem (2) einen ersten Wärmetauscher (8) als Wärmeübertragungsmittel umfasst, über dessen Primärseite das erste Ende (4) des Wärmerohrsystems (2) mit dem zweiten Ende (12) des Wärmerohrsystems (2) fluidverbunden ist, so dass ein erstes Wärmeträgermedium vom ersten Ende (4) des Wärmerohrsystems (2) zum zweiten Ende (12) des Wärmerohrsystems (2) passieren kann, und
wobei das Rohrleitungssystem (1) zudem ein zweites Wärmerohrsystem (3) umfasst, das von dem ersten Wärmerohrsystem (2) fluidgetrennt ist,
wobei das zweite Wärmerohrsystem (3) mit dem ersten Wärmetauscher (8) über dessen Sekundärseite fluidverbunden ist, so dass das zweite Wärmerohrsystem (3) mittels Wärme aus dem ersten Wärmerohrsystem (2) erwärmt werden kann, und dem ersten Wärmeträgermedium im ersten Rohrsystem (2) in einem Rohrleitungsabschnitt, der primärseitig den ersten Wärmetauscher (8) mit dem zweitem Ende (12) des ersten Wärmerohrsystems (2) fluidverbindet, durch einen zweiten Wärmetauscher (15) erneut Wärme entzogen werden kann, um das zweite Wärmeträgermedium im zweiten Wärmerohrsystem (3) zu erwärmen, schon bevor das zweite Wärmeträgermedium durch den ersten Wärmetauscher (8) erwärmt wird, wobei das zweite Wärmerohrsystem (3) einen Wärmeträgermedium-Pufferspeicher für das zweite Wärmeträgermedium aufweist, in dem das zweite Wärmeträgermedium durch den zweiten Wärmetauscher (15) erwärmt werden kann, wobei der erste Wärmetauscher (8) außerhalb des Wärmeträgermedium-Pufferspeichers angeordnet ist,
**gekennzeichnet durch**
eine Strahlpumpe (24) oder ein automatisches Mischventil, welche bzw. welches zwei Eingänge (25, 26) und einen Ausgang (27) aufweist und dazu ausgelegt ist, die Temperatur des Wärmeträgermediums vor Eintritt in den ersten Wärmetauscher (8) abzusenken,
wobei der erste Eingang (25) mit dem ersten Ende (4) des ersten Wärmerohrsystems (2) fluidverbunden ist,
wobei der zweite Eingang (26) mit einer Wärmeträgermediumabflussöffnung (10) des ersten Wärmetauschers (8) oder mit einem Rohrabschnitt zwischen dem ersten Wärmetauscher (8) und dem zweiten Ende (12) des ersten Wärmerohrsystems (2) fluidverbunden ist, und
wobei der Ausgang (27) der Strahlpumpe (24) oder des automatischen Mischventils zu einer Wärmeträgerzuflussöffnung (7) des ersten Wärmetauschers (8) führt.

2. Rohrleitungssystem (1) nach Anspruch 1, **dadurch gekennzeichnet, dass** der Wärmeträgermedium-Pufferspeicher ein Wärmeträgermedium-Tank ist.

3. Rohrleitungssystem (1) nach einem der vorhergehenden Ansprüche, **dadurch gekennzeichnet, dass** der Rohrleitungsabschnitt, der den ersten Wärmetauscher (8) mit dem zweiten Ende (12) des ersten Wärmerohrsystems (2) fluidverbindet, durch den Wärmeträgermedium-Pufferspeicher hindurch verläuft, um das zweite Wärmeträgermedium zu erwärmen.

4. Rohrleitungssystem (1) nach einem der vorhergehenden Ansprüche, **dadurch gekennzeichnet, dass** der zweite Wärmetauscher (15) sekundärseitig als Wärmeträgermedium-Pufferspeicher ausgeführt ist.

5. Rohrleitungssystem (1) nach einem der vorhergehenden Ansprüche, **dadurch gekennzeichnet, dass** eine Fluidverbindung vorhanden ist, über die das zweite Wärmeträgermedium erneut in den Wärmeträgermedium-Pufferspeicher eingespeist werden kann, nachdem es bereits durch den ersten Wärmetauscher (8) und den zweiten Wärmetauscher (15) erwärmt worden ist.

6. Rohrleitungssystem (1) nach einem der vorhergehenden Ansprüche, **dadurch gekennzeichnet, dass** an dem Wärmeträgermedium-Pufferspeicher ein Wärmeübertragungsmittel (17, 18) angeordnet ist, um an das zweite Wärmeträgermedium Wärme aus einer Wärmequelle, die zusätzlich zur Wärmeübertragung aus dem ersten Wärmeträgermedium Wärme bereitstellt, zu übertragen.

7. Rohrleitungssystem (1) nach einem der vorhergehenden Ansprüche, **dadurch gekennzeichnet, dass** die Fernwärmenetz-Vorlaufübergabestation (5) und/oder die Fernwärmenetz-Rücklaufübergabestation (13) und/oder eine Wärmeträgermediumübergabestation für das zweite Wärmeträgermedium eine Einheit mit dem Rohrleitungssystem (1) bilden.

8. Rohrleitungssystem (1) nach einem der vorhergehenden Ansprüche, **dadurch gekennzeichnet, dass** eine Mehrzahl von Wärmeträgermedium-Pufferspeichern vorhanden ist, die mit dem zweiten Wärmerohrsystem (3) fluidverbunden ist.

9. Rohrleitungssystem (1) nach einem der vorherigen Ansprüche, **dadurch gekennzeichnet, dass** das erste Wärmeträgermedium Wasser ist und das zweite Wärmeträgermedium Trinkwasser ist.

10. Rohrleitungssystem (1) nach einem der vorherigen Ansprüche, **dadurch gekennzeichnet, dass** das Rohrleitungssystem (1) ein Hausrohrleitungssystem ist.

11. Verfahren zum Erwärmen eines zweiten Wärmeträgermediums eines zweiten Wärmerohrsystems (3) eines Rohrleitungssystems (1), bei dem über einen zweiten Wärmetauscher (15) einem ersten Wärmeträgermedium, das durch ein erstes Wärmerohrsystem (2) strömt, Restwärme entnommen wird, um das zweite Wärmeträgermedium in einem Wärmeträgermedium-Pufferspeicher vorzuerwärmen, wobei das erste Wärmeträgermedium zu diesem Zeitpunkt bereits einen in seinem Strömungsweg stromaufwärts angeordneten ersten Wärmetauscher (8) zum Erwärmen des Wärmetransportmediums im zweitem Wärmerohrsystems (3) passiert hat,
wobei der erste Wärmetauscher (8) außerhalb des Wärmeträgermedium-Pufferspeichers angeordnet ist,
wobei das Rohrleitungssystem (1) eine Strahlpumpe (24) oder ein automatisches Mischventil aufweist, die bzw. das dem ersten Wärmeträgermedium, das in ein erstes Ende (4) des ersten Wärmerohrsystems (2) aus dem Fernwärmenetz-Vorlauf (6) einströmt, erstes Wärmeträgermedium unmittelbar aus einer Wärmeträgermediumabflussöffnung (10) des ersten Wärmetauschers (8) oder erstes Wärmeträgermedium aus einem Primärrücklauf (14) des ersten Wärmerohrsystems (2) beimischt und erstes Wärmeträgermedium mit abgekühlter Temperatur in den ersten Wärmetauscher (8) einleitet.

12. Verfahren zum Erwärmen eines zweiten Wärmeträgermediums nach Anspruch 11, **dadurch gekennzeichnet, dass** das zweite Wärmeträgermedium in dem Wärmeträgermedium-Pufferspeicher zusätzlich durch eine Solarthermieanlage (17) erwärmt wird.

13. Verfahren zum Erwärmen eines zweiten Wärmeträgermediums nach Anspruch 12, **dadurch gekennzeichnet, dass** das zweite Wärmeträgermedium zunächst in einen Wärmeträgermedium-Pufferspeicher einströmt, der durch die Sekundärseite eines zweiten Wärmetauscher (15) gebildet ist, dort einen ersten Abschnitt des ersten Wärmetauschers (15) durchströmt, wobei in dem ersten Abschnitt Wärmeüberträgungsmittel zum Übertragen von Restwärme aus einem ersten Wärmerohrsystem (2) angeordnet sind, anschließend einen zweiten Abschnitt des zweiten Wärmetauschers (15) durchströmt, wobei in den zweiten Abschnitt Wärmeübertragungsmittel zum Übertragen von Wärme aus einer Solarthermieanlage (17) angeordnet sind und schließlich aus dem zweiten Wärmetauscher (15) in einen Zirkulationskreislauf (19) strömt, in der das Wärmeträgermedium durch den ersten Wärmetauscher (8) zusätzliche Wärme aus einem ersten Wärmerohrsystem (2) entnehmen kann, die eine höhere Temperatur hat, als die Restwärme, die im ersten Abschnitt des Wärmeträgermedium-Pufferspeichers bereitgestellt wird.

## Claims

1. Pipe system (1)
with a first heating pipe system (2) comprising a first end (4), which is connectable to a district heating network flow line transfer station (5) and which comprises a second end (12) that is connectable to a district heating network return flow transfer station (13), wherein the first heating pipe system (2) comprises a first heat exchanger (8) as heat transfer means, and via its primary side the first end (4) of the heating pipe system (2) is fluidly connected with the second end (12) of the heating pipe system (2) so that a first heat transfer medium can pass from the first end (4) of the heating pipe system (2) to the second end (12) of the heating pipe system (2), and
wherein the pipe system (1) also includes a second heating pipe system (3), which is fluidly isolated from the first heating pipe system (2),
wherein the second heating pipe system (3) is fluidly connected to the first heat exchanger (8) via its secondary side so that the second heating pipe system (3) can be heated by heat from the first heating pipe system (2), and
heat of the first heat transfer medium in the first heating pipe system (2) can be extracted again in a pipe section, which fluidly connects the primary side of the first heat exchanger (8) with the second end (12) of the first heating pipe system (2), by a second heat exchanger (15) to heat up the second heat transfer medium in the second heating pipe system (3) even before the second heat transfer medium is heated up by the first heat exchanger (8), wherein the second heating pipe system (3) comprises a heat transfer medium buffer reservoir for the second heat transfer medium, in which the second heat transfer medium can be heated by the second heat exchanger (15), wherein the first heat exchanger (8) is arranged outside the heat transfer medium buffer reservoir,
**characterised in that**
a jet pump (24) or an automatic mixing valve which comprises two inputs (25, 26) and an output (27) and is designed to lower the temperature of the heat transfer medium before the entry into the first heat exchanger (8),
wherein the first input (25) is fluidly connected to the first end (4) of the first heating pipe system (2),
wherein the second input (26) is fluidly connected to a heat transfer medium discharge opening (10) of the first heat exchanger (8) or with a pipe section between the first heat exchanger (8) and the second end (12) of the first heating pipe system (2), and
wherein the output (27) of the jet pump (24) or the automatic mixing valve leads to a heat transfer medium inflow opening (7) of the first heat exchanger (8).

2. Pipe system (1) according to claim 1, **characterised in that** the heat transfer medium buffer reservoir is a heat transfer medium tank.

3. Pipe system (1) according to one of the preceding claims, **characterised in that** the pipe section, which fluidly connects the first heat exchanger (8) and the second end (12) of the first heating pipe system (2), passes through the heat transfer medium buffer reservoir to heat up the second heat transfer medium.

4. Pipe system (1) according to one of the preceding claims, **characterised in that** the second heat exchanger (15) is designed on the secondary side as a heat transfer medium buffer reservoir.

5. Pipe system (1) according to one of the preceding claims, **characterised in that** a fluid connection is present via which the second heat transfer medium can be fed again into the heat transfer medium buffer reservoir after it has already been heated by the first heat exchanger (8) and the second heat exchanger (15).

6. Pipe system (1) according to one of the preceding claims, **characterised in that** at the heat transfer medium buffer reservoir heat transfer means (17, 18) are provided to transfer heat to the second heat transfer medium from a heat source, which provides heat in addition to the provided heat from the first heat transfer medium.

7. Pipe system (1) according to one of the preceding claims, **characterised in that** the district heating network flow line transfer station (5) and/or the district heating network return flow transfer station (13) and/or a heat transfer medium transfer station for the second heat transfer medium form a unit with the pipe system (1).

8. Pipe system (1) according to one of the preceding claims, **characterised in that** a plurality of heat transfer medium buffer reservoirs is provided, which is fluidly connected to the second heating pipe system (3).

9. Pipe system (1) according to one of the preceding claims, **characterised in that** the first heat transfer medium is water and the second heat transfer medium is drinking water.

10. Pipe system (1) according to one of the preceding claims, **characterised in that** the pipe system (1) is a home piping system.

11. Method for heating a second heat transfer medium of a second heating pipe system (3) of a pipe system (1) in which residual heat of a first heat transfer medium which flows through a first heating pipe system (2) is removed via a second heat exchanger (15) to preheat the second heat transfer medium in a heat transfer medium buffer reservoir, wherein at this moment the first heat transfer medium has already passed a first heat exchanger (8) being arranged upstream to heat up the heat transfer medium in the second heating pipe system (3),
wherein the first heat exchanger (8) is arranged outside the heat transfer medium buffer reservoir,
wherein the pipe system (1) comprises a jet pump (24) or an automatic mixing valve, which adds first heat transfer medium directly from a heat transfer medium discharge opening (10) of the first heat exchanger (8) or first heat transfer medium from a primary return flow (14) of the first heating pipe system (2) and introduces first heat transfer medium, which flows into a first end (4) of the first heating pipe system (2) from the district heating network flow line (6), with reduced temperature into the first heat exchanger (8).

12. Method for heating a second heat transfer medium according to claim 11, **characterised in that** the second heat transfer medium in the heat transfer medium buffer reservoir is additionally heated by a solar thermal system (17).

13. Method for heating a second heat transfer medium according to claim 12, **characterised in that** the second heat transfer medium initially flows into a heat transfer medium buffer reservoir, which is formed by the secondary side of a second heat exchanger (15), where it flows through a first section of the first heat exchanger (15), wherein in the first section heat transfer means are arranged to transfer residual heat from a first heating pipe system (2), then flows through a second section of the second heat exchanger (15), wherein in the second section heat transfer means are arranged to transfer heat from a solar heating system (17), and finally flows out of the second heat exchanger (15) into a circulation circuit (19), in which the heat transfer medium can extract additional heat by the first heat exchanger (8) from a first heating pipe system (2), that has a higher temperature than the residual heat provided in the first section of the heat transfer medium buffer reservoir.

## Revendications

1. Système de canalisation (1)
avec un premier système de caloduc (2), qui présente une première extrémité (4), qui est reliable avec une station de transfert aller du réseau de téléthermie (5), et qui présente une seconde extrémité (12), qui est reliable avec une station de transfert retour du réseau de téléthermie (13), le premier système de caloduc (2) comportant un premier échangeur thermique (8) comme agent caloporteur, la première extrémité (4) du système de caloduc (2) étant reliée fluidiquement via le côté primaire de celui-ci avec la seconde extrémité (12) du système de caloduc (2), de sorte qu'un premier milieu caloporteur peut passer de la première extrémité (4) du système de caloduc (2) à la seconde extrémité (12) du système de caloduc (2), et le système de canalisation (1) comprenant par ailleurs un second système de caloduc (3), qui est isolé fluidiquement du premier système de caloduc (2),
le second système de caloduc (3) étant relié fluidiquement avec le premier échangeur thermique (8) via son côté secondaire, de sorte que le second système de caloduc (3) peut être réchauffé au moyen de chaleur provenant du premier système de caloduc (2), et
de la chaleur pouvant de nouveau être prélevée du premier milieu caloporteur dans le premier système de caloduc (2) dans une section de canalisation, qui relie côté primaire fluidiquement le premier échangeur thermique(8) avec la seconde extrémité (12) du premier système de caloduc (2), par un second échangeur thermique (15), afin de déjà réchauffer le second milieu caloporteur dans le second système de caloduc (3), avant que le second milieu caloporteur soit réchauffé par le premier échangeur thermique (8),
le second système de caloduc (3) présentant un réservoir d'accumulation de milieu caloporteur pour le second système de caloduc (3), dans lequel le second milieu caloporteur peut être réchauffé par le second échangeur thermique (15),
le premier échangeur thermique (8) étant disposé en-dehors du réservoir d'accumulation de milieu caloporteur,
**caractérisé par**
une pompe à jet (24) ou un mitigeur automatique, laquelle ou lequel présente deux entrées (25, 26) et une sortie (27) et est conçu pour abaisser la température du milieu caloporteur avant l'admission dans le premier échangeur thermique (8),
la première entrée (25) étant reliée fluidiquement avec la première extrémité (4) du premier système de caloduc (2),
la seconde entrée (26) étant reliée fluidiquement avec un orifice d'échappement de milieu caloporteur (10) du premier échangeur thermique (8) ou avec une section de tuyau entre le premier échangeur thermique (8) et la seconde extrémité (12) du premier système de caloduc (2), et
la sortie (27) de la pompe à jet (24) ou du mitigeur automatique aboutissant à un orifice d'arrivée de milieu caloporteur (7) du premier échangeur thermique (8).

2. Système de canalisation (1) selon la revendication 1, **caractérisé en ce que** le réservoir d'accumulation de milieu caloporteur est une citerne de milieu caloporteur.

3. Système de canalisation (1) selon une quelconque des revendications précédentes, **caractérisé en ce que** la section de canalisation, qui relie fluidiquement le premier échangeur thermique(8) avec la seconde extrémité (12) du premier système de caloduc (2), passe à travers le réservoir d'accumulation de milieu caloporteur, afin de réchauffer le second milieu caloporteur.

4. Système de canalisation (1) selon une quelconque des revendications précédentes, **caractérisé en ce que** le second échangeur thermique (15) est agencé côté secondaire comme réservoir d'accumulation de milieu caloporteur.

5. Système de canalisation (1) selon une quelconque des revendications précédentes, **caractérisé en ce qu'**une liaison fluidique est présente, via laquelle le second milieu caloporteur peut être alimenté de nouveau dans le réservoir d'accumulation de milieu caloporteur, après qu'il ait été réchauffé par le premier échangeur thermique (8) et le second échangeur thermique (15).

6. Système de canalisation (1) selon une quelconque des revendications précédentes, **caractérisé en ce que**, sur le réservoir d'accumulation de milieu caloporteur, un agent caloporteur (17, 18) est disposé, afin de transmettre au second agent caloporteur de la chaleur issue d'une source de chaleur, qui met à disposition de la chaleur en plus de la transmission de chaleur issue du premier milieu caloporteur.

7. Système de canalisation (1) selon une quelconque des revendications précédentes, **caractérisé en ce que** la station de transfert aller du réseau de téléthermie (5) et/ou la station de transfert retour du réseau de téléthermie (13) et/ou une station de transfert de milieu caloporteur pour le second milieu caloporteur constituent une unité avec le système de canalisation (1).

8. Système de canalisation (1) selon une quelconque des revendications précédentes, **caractérisé en ce qu'**une majorité de réservoirs d'accumulation de milieu caloporteur est présente, qui est reliée fluidiquement avec le second système de caloduc (3).

9. Système de canalisation (1) selon une quelconque des revendications précédentes, **caractérisé en ce que** le premier milieu caloporteur est de l'eau et **en ce que** le second milieu caloporteur est de l'eau potable.

10. Système de canalisation (1) selon une quelconque des revendications précédentes, **caractérisé en ce que** le système de canalisation (1) est un système de canalisation domestique.

11. Procédé en vue du réchauffage d'un second milieu caloporteur d'un second système de caloduc (3) d'un système de canalisation (1), sur lequel de la chaleur résiduelle est prélevée via un second échangeur thermique (15) d'un premier milieu caloporteur, qui circule à travers un premier système de caloduc (2), afin de préchauffer le second milieu caloporteur dans un réservoir d'accumulation de milieu caloporteur, le premier milieu caloporteur ayant à ce moment déjà passé un premier échangeur thermique (8) disposé en amont dans sa trajectoire d'écoulement en vue du réchauffage du milieu de caloduc dans le second système de caloduc (3),
le premier échangeur thermique (8) étant disposé en-dehors du réservoir d'accumulation de milieu caloporteur,
le système de canalisation (1) présentant une pompe à jet (24) ou un mitigeur automatique, laquelle et/ou lequel additionne dans le premier milieu caloporteur, qui afflue dans une première extrémité (4) du premier système de caloduc (2) provenant de l'aller du réseau de téléthermie (6), du premier milieu caloporteur directement issu d'un orifice d'échappement de milieu caloporteur (10) du premier échangeur thermique (8) ou du premier milieu caloporteur issu d'un retour primaire (14) du premier système de caloduc (2) et introduit du premier milieu caloporteur à température refroidie dans le premier échangeur thermique (8).

12. Procédé en vue du réchauffage d'un second milieu caloporteur selon la revendication 11, **caractérisé en ce que** le second milieu caloporteur est réchauffé de manière supplémentaire dans le réservoir d'accumulation de milieu caloporteur par une installation à thermie solaire (17).

13. Procédé en vue du réchauffage d'un second milieu caloporteur selon la revendication 12, **caractérisé en ce que** le second milieu caloporteur afflue d'abord dans un réservoir d'accumulation de milieu caloporteur qui est constitué par le côté secondaire d'un second échangeur thermique (15), y passe une première section du premier échangeur thermique (15), des agents caloporteurs étant disposés dans la première section en vue de transmettre de la chaleur résiduelle issue d'un premier système de caloduc (2), passe ensuite une seconde section du second échangeur thermique (15), des agents caloporteurs étant disposés dans la première section en vue de transmettre de la chaleur résiduelle issue d'une installation à thermie solaire (17), et s'écoule enfin du second échangeur thermique (15) dans un circuit de circulation (19), dans lequel le milieu caloporteur peut prélever par le premier échangeur thermique (8) de la chaleur supplémentaire issue d'un premier système de caloduc (2), qui possède une température supérieure à celle de la chaleur résiduelle qui est mise à disposition dans la première section du réservoir d'accumulation de milieu caloporteur.
